# EUROPEAN PATENT APPLICATION

(11) **EP 4 465 666 A1**
(43) Date of publication of application: **20.11.2024**
(21) Application number: 22919506.0
(22) Date of filing: 14.01.2022
(51) Int. Cl.: H04W 4/50, H04W 8/18

(54) **ACCESS TYPE-BASED SLICE EVENT SUBSCRIPTION REPORTING METHODS AND APPARATUS, AND STORAGE MEDIUM**

(71) Applicant: Beijing Xiaomi Mobile Software Co., Ltd., Beijing 100085 (CN)
(72) Inventor: SHEN, Yang, Beijing 100085 (CN)
(74) Representative: Dehns Germany Partnerschaft mbB
(86) International application number: PCT/CN2022/072171
(87) International publication number: WO 2023/133858

(57) **Abstract**

Provided in the embodiments of the present disclosure are access type-based slice event subscription reporting methods and apparatus, a communication device and a storage medium. An access type-based slice event subscription reporting method is executed by an AF, and may comprise: sending to an NEF a first subscription request so as to request an event report of a network slice associated with an access type, wherein the first subscription request comprises access type information indicating the access type, and the first subscription request is used for the NEF to send, to a network slice admission control function (NSACF), a second subscription request subscribing to the event report requested by the first subscription request.

## Description

### TECHNICAL FIELD

The disclosure relates to, but is not limited to, the field of communication technology, and in particular to methods and apparatus for subscribing to and reporting a slice event based on an access type and a related storage medium.

### BACKGROUND

In a communication system, network slicing may provide complete network functions, such as a radio access network function, a core network function, an Internet Protocol Multimedia Subsystem (IMS) function. The network may support one or more network slices. The network slice may provide different committed services and is User Equipment (UE)-specific. For example, the network slice may be associated with the number of registered UEs corresponding to at least one access type or the number of activated Protocol Data Unit (PDU) sessions.

However, at present, charging modes and rates corresponding to different access types are different, and the number of users corresponding to different access types and/or the number of activated PDU sessions have an increasingly significant impact on network slice status information. For example, for different times or different service types, the number of registered UEs corresponding to different access types and the number of established PDUs are significantly different. However, at present, it is often impossible to accurately locate and meet needs of operational services, and it is impossible to configure resources and execute related services based on a network status, resulting in poor user service experience.

### SUMMARY

Embodiments of the disclosure provide methods and apparatuses for subscribing to or reporting a slice event based on an access type, a communication device, and a storage medium.

According to a first aspect of the disclosure, there is provided a method for subscribing to and reporting a slice event based on an access type, performed by an application function (AF), the method including:
sending a first subscribe request to a Network Exposure Function (NEF) to request for an event report of a network slice associated with the access type; in which the first subscribe request includes access type information for indicating the access type, and the first subscribe request is used for instructing the NEF to send, to a Network Slice Admission Control Function (NSACF), a second subscribe request for subscribing to the event report requested by the first subscribe request.

According to a second aspect of the disclosure, there is provided a method for subscribing to and reporting a slice event based on an access type, performed by a Network Exposure Function (NEF), the method including:
receiving a first subscribe request sent by an Application Function (AF), in which the first subscribe request is used for requesting for an event report of a network slice associated with the access type; and the first subscribe request includes access type information for indicating the access type; and
sending a second subscribe request to a Network Slice Admission Control Function (NSACF), in which the second subscribe request is used for subscribing to the event report requested by the first subscribe request.

According to a third aspect of the disclosure, there is provided a method for subscribing to and reporting a slice event based on an access type, performed by a Network Slice Admission Control Function (NSACF), the method including:
receiving a second subscribe request sent by a Network Exposure Function (NEF); in which the second subscribe request is sent by the NEF based on an indication of a received first subscribe request; the first subscribe request is used for requesting for an event report of a network slice associated with the access type, and the first subscribe request includes access type information for indicating the access type; and
sending the event report requested by the first subscribe request and subscribed to by the second subscribe request to the NEF.

According to a fourth aspect of the disclosure, there is provided an apparatus for subscribing to and reporting a slice event based on an access type, applied to an Application Function (AF), the apparatus including:
a first sending module, configured to send a first subscribe request to a Network Exposure Function (NEF) to request for an event report of a network slice associated with the access type; in which the first subscribe request includes access type information for indicating the access type, and the first subscribe request is used for instructing the NEF to send, to a Network Slice Admission Control Function (NSACF), a second subscribe request for subscribing to the event report requested by the first subscribe request.

According to a fifth aspect of the disclosure, there is provided an apparatus for subscribing to and reporting a slice event based on an access type, applied to a Network Exposure Function (NEF), the apparatus including:
a second receiving module, configured to receive a first subscribe request sent by an Application Function (AF), in which the first subscribe request is used for requesting for an event report of a network slice associated with the access type; and the first subscribe request includes access type information for indicating the access type; and
a second sending module, configured to send a second subscribe request to a Network Slice Admission Control Function (NSACF), in which the second subscribe request is used for subscribing to the event report requested by the first subscribe request.

According to a sixth aspect of the disclosure, there is provided an apparatus for subscribing to and reporting a slice event based on an access type, applied to a Network Slice Admission Control Function (NSACF), the apparatus including:
a third receiving module, configured to receive a second subscribe request sent by a Network Exposure Function (NEF); in which the second subscribe request is sent by the NEF based on an indication of a received first subscribe request; the first subscribe request is used for requesting for an event report of a network slice associated with the access type, and the first subscribe request includes access type information for indicating the access type; and
a third sending module, configured to send the event report requested by the first subscribe request and subscribed to by the second subscribe request to the NEF.

According to a seventh aspect of the disclosure, there is provided a communication device. The communication device includes:
a processor; and
memory, for storing instructions executable by the processor;
in which the processor is configured to perform the method for subscribing to and reporting the slice event based on the access type described in any embodiment of the disclosure when running the executable instructions.

According to an eighth aspect of the disclosure, there is provided a computer storage medium. The computer storage medium has a computer-executable program stored thereon. When the executable program is executed by a processor, the method for subscribing to and reporting the slice event based on the access type described in any embodiment of the disclosure is performed.

The technical solutions provided by the embodiments of the present disclosure may include the following beneficial effects:

In embodiments of the disclosure, the first subscribe request may be sent to the NEF through the AF to request for the event report of the network slice associated with the access type. The first subscribe request includes the access type information for indicating the access type, and the first subscribe request is used for instructing the NEF to send the second subscribe request to the NSACF, in which the second subscribe request is used for subscribing to the event report requested by the first subscribe request. In this way, the network device (such as the AF or the NEF) may obtain, based on the subscribe request (the first subscribe request or the second subscribe request), the event report of the network slice associated with the access type sent by at least one NSACF, that is the network may obtain the network status of the network slice. This enables the network device to accurately locate and meet needs of operator's services and also enables the network device to configure resources and execute services based on the network status, thereby improving user experience satisfaction.

It is understandable that both the foregoing general description and the following detailed description are exemplary and explanatory only and are not restrictive of embodiments of the disclosure.

### BRIEF DESCRIPTION OF THE DRAWINGS

FIG. 1 is a schematic structural diagram illustrating a wireless communication system.
FIG. 2 is a flowchart illustrating a method for subscribing to and reporting a slice event based on an access type according to an exemplary embodiment.
FIG. 3 is a flowchart illustrating a method for subscribing to and reporting a slice event based on an access type according to an exemplary embodiment.
FIG. 4 is a flowchart illustrating a method for subscribing to and reporting a slice event based on an access type according to an exemplary embodiment.
FIG. 5 is a flowchart illustrating a method for subscribing to and reporting a slice event based on an access type according to an exemplary embodiment.
FIG. 6 is a flowchart illustrating a method for subscribing to and reporting a slice event based on an access type according to an exemplary embodiment.
FIG. 7 is a flowchart illustrating a method for subscribing to and reporting a slice event based on an access type according to an exemplary embodiment.
FIG. 8 is a flowchart illustrating a method for subscribing to and reporting a slice event based on an access type according to an exemplary embodiment.
FIG. 9 is a flowchart illustrating a method for subscribing to and reporting a slice event based on an access type according to an exemplary embodiment.
FIG. 10 is a flowchart illustrating a method for subscribing to and reporting a slice event based on an access type according to an exemplary embodiment.
FIG. 11 is a block diagram illustrating an apparatus for subscribing to and reporting a slice event based on an access type according to an exemplary embodiment.
FIG. 12 is a block diagram illustrating an apparatus for subscribing to and reporting a slice event based on an access type according to an exemplary embodiment.
FIG. 13 is a block diagram illustrating an apparatus for subscribing to and reporting a slice event based on an access type according to an exemplary embodiment.
FIG. 14 is a block diagram illustrating a User Equipment (UE) according to an exemplary embodiment.
FIG. 15 is a block diagram illustrating a base station according to an exemplary embodiment.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in following exemplary embodiments do not represent all implementations consistent with embodiments of the disclosure. Rather, they are merely examples of apparatuses and methods consistent with aspects of disclosed embodiments as recited in the appended claims.

Terms used in embodiments of the disclosure are for the purpose of describing specific embodiments only, and are not intended to limit embodiments of the disclosure. As used in the examples of the disclosure and the appended claims, the singular forms "a" and "the" are also intended to include the plural unless the context clearly dictates otherwise. It is understandable that the term "and/or" as used herein refers to and includes any and all possible combinations of one or more of the associated listed items.

It is understandable that although embodiments of the disclosure may use terms "first," "second," "third" or the like to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the word "if" as used herein may be interpreted as "at" or "when" or "in response to determining."

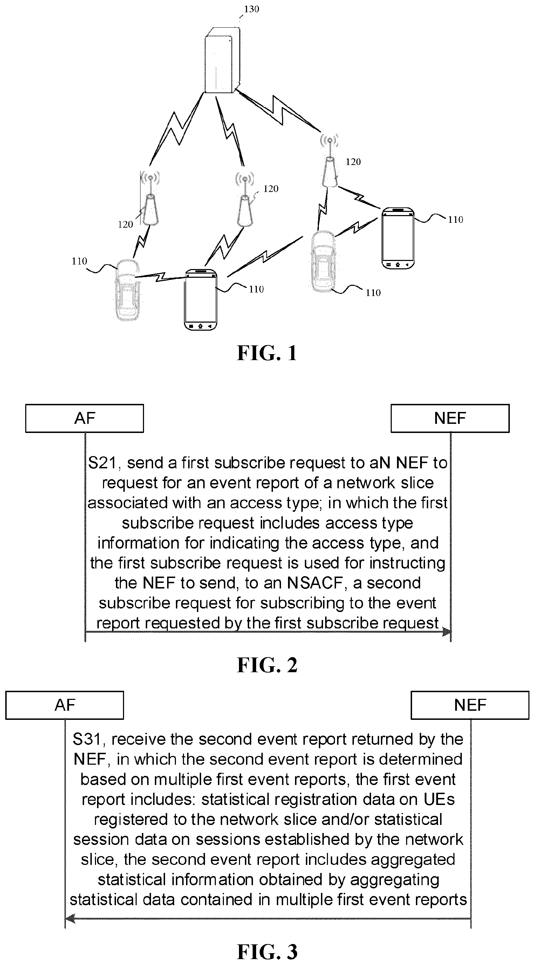

FIG. 1 is a schematic structural diagram illustrating a wireless communication system according to an embodiment of the disclosure. As illustrated in FIG. 1, the wireless communication system is a communication system based on cellular mobile communication technology. The wireless communication system may include: several User Equipment 110 and several base stations 120.

The UE 110 may be a device that provides voice and/or data connectivity to the user. The UE 110 may communicate with one or more core networks via a Radio Access Network (RAN). The UE 110 may be an Internet of Things (IoT) UE, such as a sensor device or a mobile phone (or called cellular phone), or a computer with the IoT UE, such as a fixed, portable, pocket, hand-held, built-in or vehicle-mounted device. For example, the UE 110 may be station (STA), subscriber unit, subscriber station, mobile station, mobile, remote station, access point, remote terminal, access terminal, user terminal, user agent, user device, or user equipment. Or, the UE 110 may be equipment of an unmanned aerial vehicle. Or, the UE 110 may be a vehicle-mounted device, for example a trip computer with a wireless communication function, or a wireless UE connected externally to the trip computer. Or, the UE 110 may be a roadside device, for example, a street lamp, a signal lamp, or other roadside devices with a wireless communication function.

The base station 120 may be a network side device in a wireless communication system. The wireless communication system may be a 4th generation mobile communication (4G) system, also known as Long Term Evolution (LTE) system. Or, the wireless communication system may be a 5G system, also known as New Radio (NR) system or 5G NR system. Or, the wireless communication system may be a next-generation system of the 5G system. The access network in the 5G system may be called a New Generation-Radio Access Network (NG-RAN.

The base station 120 may be an evolved base station (eNB) adopted in the 4G system. Or, the base station 120 may be a base station (gNB) adopting a centralized-distributed architecture in the 5G system. When the base station 120 adopts a centralized-distributed architecture, it generally includes a central unit (CU) and at least two distributed unit (DUs). The centralized unit is provided with Packet Data Convergence Protocol (PDCP) layer, Radio Link Control (RLC) layer, and Medium Access Control (MAC) layer protocol stacks. A Physical (PHY) layer protocol stack is set in the distributed unit. Embodiments of the disclosure do not limit the specific implementation manner of the base station 120.

A wireless connection may be established between the base station 120 and the UE110 through a wireless air interface. In different embodiments, the wireless air interface is a wireless air interface based on the 4G standard. Or, the wireless air interface is a wireless air interface based on the 5G standard. For example, the wireless air interface is the NR. Or, the wireless air interface may be a wireless air interface based on a technical standard of a next-generation mobile communication network of 5G.

In some embodiments, an End to End (E2E) connection may also be established between UEs 110, such as an vehicle to everything (V2X) communication including vehicle to vehicle (V2V) communication, vehicle to infrastructure (V2I) communication and vehicle to pedestrian (V2P) communication.

Here, the above-mentioned UE may be regarded as the terminal equipment in following embodiments.

In some embodiments, the foregoing-mentioned wireless communication system may further include a network management device 130.

Several base stations 120 are connected to the network management device 130 respectively. The network management device 130 may be a core network device in the wireless communication system. For example, the network management device 130 may be an Access and Mobility Management Function (AMF). Or, the network management device may be other core network devices, such as Session Management Function (SMF), User Plane Function (UPF), Network Exposure Function (NEF), NF Repository Function (NRF) or Network Slice Selection Function (NSSF). The implementation form of the network management device 130 is not limited in embodiments of the disclosure.

In order to facilitate the understanding of those skilled in the art, embodiments of the disclosure list a plurality of implementation manners to clearly illustrate the technical solutions of embodiments of the disclosure. Certainly, those skilled in the art may understand that the multiple embodiments according to embodiments of the disclosure may be executed independently, combined with the methods according to other embodiments of the disclosure, or executed alone or in combination with some methods in other related technologies, which is not limited in embodiments of the disclosure.

In order to better understand the technical solution according to any embodiment of the disclosure, relevant contents of the network slice will be explained first.

In an embodiment, one network slice may be associated with one Network Slice Admission Control Function (NSACF). In another embodiment, one network slice may be associated with multiple NSACFs. In some embodiments, the term "multiple" refers to 2 or more.

In an embodiment, an operator may deploy multiple network slices to provide the same function, or may deploy different network slices to provide different functions.

In one embodiment, the selection of a set of network slice instances for the UE is usually as follows. The selection is triggered by an Access and Mobility Management Function (AMF) that is contacted first in a registration process through an interaction with a Network Slice Selection Function (NSSF); and the selection of the set of network slice instances may result in a change of the AMF. In each Public Land Mobile Network (PLMN), one Protocol Data Unit (PDU) session belongs to one and only one specific network slice instance. Here, different network slice instances may have slice-specific PDU sessions using the same Data Network Name (DNN), but different network slice instances do not share the PDU sessions. Here, in a handover process, the source AMF selects the target AMF by interacting with a NF Repository Function (NRF).

In one embodiment, a network slice type (Generic Network Slice Template, NEST) may be applied to a network slice that is usually supported by multiple network slice instances. The general network slice template (Network Slice Type, GST) may define attributes supported by the network slice.

In one embodiment, the NSACF may be used for monitoring the number of registered UEs and/or the number of PDU sessions of the network slice supporting the network slice admission function. The NSACF may also configure access type information of Network Slice Selection Assistance Information (S-NSSAI) for performing the network slice acceptance function.

In one embodiment, the NSACF may configure, for the network slice, an allowed maximum number of access UEs and/or an allowed maximum number of access PDU sessions. Here, the NSACF may support monitoring and/or admission control of the allowed maximum number of access UEs and/or the number of access PDU sessions within the PLMN. For example, if the number of UEs registered to a certain NSACF exceeds a certain threshold (such as the allowed maximum number of access UEs), the NSACF will refuse the registration to control the number of current access UEs to not exceed the allowed maximum number of access UEs configured by the network. As another example, if the number of activated PDU sessions in a certain NSACF exceeds a certain threshold (such as the allowed maximum number of access PDU sessions), the NSACF will refuse the activation of the PDU sessions to control the number of current access PDU sessions to not exceed the allowed maximum number of access PDU sessions. Here, the activated PDU session in the NSACF may refer to the PDU session accessed in the NSACF.

In an embodiment, an operator network may deploy one NSACF or multiple NSACFs. One NSACF may serve one or more network slices in one service area. In one service area, one network slice may be processed by one NSACF, or one network slice may be one NSACF instance, or one network slice may be one NSACF set. One PLMN may have one or more service areas.

In one embodiment, the Application Function (AF) may be used to obtain the status information of the network slice. For example, the AF may obtain the at least one of the status information of the network slice: a number of registered UEs, a number of established PDU sessions, a ratio of the number of registered UEs to an allowed maximum number of registered UEs, or a ratio of the number of established PDU sessions to an allowed maximum number of established PDU sessions.

As illustrated in FIG. 2, embodiments of the disclosure provide an information processing method performed by an AF. The method includes the following.

At step S21, a first subscribe request is sent to a Network Exposure Function (NEF) to request for an event report of a network slice associated with an access type; in which the first subscribe request includes access type information for indicating the access type, and the first subscribe request is used for instructing the NEF to send, to a Network Slice Admission Control Function (NSACF) a second subscribe request for subscribing to the event report requested by the first subscribe request.

Here, the AF, the NEF, and the NSACF may all be a physical device or a function performed by a physical device, which is not limited here. For example, the AF, the NEF, and the NSACF may all be various network-side devices, entities, or network elements of the access network or the core network.

In the step S21, sending the first subscribe request to the NEF may be sending the first subscribe request by the AF to a Network Function (NF) and forwarding the first subscribe request by the NF to the NEF. It is noteworthy that, the NF is a physical device or a function performed by the physical device, which is not limited here. For example, NF may be, but be not limited to, various network-side devices, entities, or network elements of an access network or a core network.

The first subscribe request is used for requesting for the event report of the network slice associated with the access type. The second subscribe request is used for subscribing to the event report of the network slice associated with the access type. For example, the second subscribe request is used for subscribing to the event report of the network slice associated with the access type requested by the first subscribe request. The second subscribe request may also include access type information for indicating the access type. Here, the first subscribe request is the same as or different from the second subscribe request.

Certainly, in some other embodiments, the first subscribe request may be used for requesting for the event report associated with the access type; and the second subscribe request may be used for subscribing to the event report of the network slice associated with the access type requested by the first subscribe request.

In some embodiments, the access type information indicates at least one of:
the access type, including a 3rd Generation Partnership Project (3GPP) type and/or a non-3GPP type;
a radio access type; or
access assistance information (addAccessInfo).

Here, the access assistance information may include access assistance information for the access type and/or the radio access type.

In some embodiments, the access type information indicates at least one of:
the access type, the radio access type, the access assistance information for the access type, or the access assistance information for the radio access type.

The access type includes at least one of: a 3GPP type; a non-3GPP type; and the 3GPP type and the non-3GPP type.

The radio access type includes at least one of:
a New Radio (NR) access type, an Evolved Universal Mobile Telecommunications System Terrestrial Radio Access (EUTRA) type, a Wireless Local Area Network (WLAN) access type, a Virtual Network (VIRTUAL) access type, a Narrowband Internet of Things (NBIOT) access type, a Wireline Network (WIRELINE) access type, a Wireline Cable Network (WIRELINE_CABLE) access type, a Wireline Broadband Network (WIRELINE_BBF) access type, an urban rail transit vehicle-ground integrated communication system (LTE-M) access type, a New Radio in Unlicensed Bands (NR_U) access type, an Evolved Universal Mobile Telecommunications System Terrestrial Radio Access in unlicensed bands (EUTRA_U) access type, a Trusted non-3GPP (TRUSTED _N3GAtype) access type, a Trusted Wireless LAN (TRUSTED_WLAN) access type, a Universal Mobile Telecommunications System Terrestrial Radio (UTRA) access type, a Global System for Mobile Communications Edge Radio Access Network (GSM EDGE Radio Access Network, GERA) access type, a New Radio Low Earth Orbit (NR_LEO) satellite access type, a New Radio Medium Earth Orbit (NR_MEO) access type, a New Radio Geostationary Earth Orbit (NR_GEO) access type, or New Radio Other Satellite (NR_OTHER_SA) access type.

In some embodiments, the event report includes at least one of:
a number of registered UEs;
a number of established PDU sessions;
a ratio of the number of registered UEs to an allowed maximum number of registered UEs; or
a ratio of the number of established PDU sessions to an allowed maximum number of established PDU sessions.

In some embodiments, both the first subscribe request and the second subscribe request may include an event identifier. The event identifier is used for indicating one of the following event reports: the number of registered UEs; the number of established PDU sessions; the ratio of the number of registered UEs to the allowed maximum number of registered UEs; or the ratio of the number of established PDU sessions to the allowed maximum number of established PDU sessions.

Here, the UE may be various mobile terminals or fixed terminals. For example, the UE may be, but is not limited to, a mobile phone, a computer, a server, a wearable device, a game control platform, or a multimedia device.

Here, the number of established PDU sessions included in the event report may be interchanged with the number of sessions corresponding to other types, and there is no limit to the specific session type. The ratio of the number of established PDU sessions to the allowed maximum number of established PDU sessions in the event report may be interchanged with the ratio of the number of established sessions of other types to the allowed maximum number of established sessions corresponding to other types, there is no limit to the specific session type.

In some embodiments, information included in the first subscribe request may be the same as the information included in the second subscribe request. In this case, the second subscribe request is the first subscribe request.

For example, both the first subscribe request and the second subscribe request may include: a slice identifier for identifying the network slice. The slice identifier is used for the NEF to determine one or more NSACFs associated with the slice. Here, the second subscribe request may be used for subscribing to the event report(s) of the network slice associated with the access type sent by one or more NSACFs.

Here, the slice identifier is used for indicating a network slice. The slice identifier may also be used for requesting for a network slice that requires to be subscribed to.

In this way, in embodiments of the disclosure, after the NEF receives the first subscribe request, the NEF may determine, based on the slice identifier included in the first subscribe request, the NSACF(s) to which the second subscribe request needs to be sent. When the slice identifier is associated with one NSACF, then the NEF may send the second subscribe request to the NSACF. If the slice identifier is associated with multiple NSACFs, then the NEF may send the second subscribe request to some or all of the multiple NSACFs.

In some other embodiments, the information included in the first subscribe request may be different from the information included in the second subscribe request. In this case, the second subscribe request is determined by the NEF based on the first subscribe request.

For example, the first subscribe request may include an application identifier. The application identifier is used for determining a slice identifier associated with the application identifier. The second subscribe request may include a slice identifier.

The application identifier is used for identifying a service and/or an application. Here, the NEF or other core network devices, such as Network Repository Function (NRF), may store an association relationship between application identifiers and slice identifiers. The NEF or the NRF may determine the slice identifier associated with the application identifier based on an acquired application identifier and the association relationship between application identifiers and slice identifiers.

If the first subscribe request does not carry any network slice, it is possible that the network has not opened the slice identifier for indicating the network slice to the AF, then the NEF may determine the slice identifier associated with the application identifier based on the application identifier included in the first subscribe request.

In this way, in embodiments of the disclosure, if the NEF receives the first subscribe request, the NEF may determine, based on the application identifier in the first subscribe request, the slice identifier of the network slice that needs to be subscribed to and determine, based on the slice identifier, the NASCF(s) to which the second subscribe request needs to be sent.

In some embodiments, the first subscribe request includes: a slice identifier and a DNN corresponding to the slice identifier. In this way, in embodiments of the disclosure, the NEF may be aware of the data network name associated with the slice identifier that the AF needs to subscribe to.

Here, if the first subscribe request includes the slice identifier and the DNN corresponding to the slice identifier, the second subscribe request may also include: the slice identifier and the DNN corresponding to the slice identifier.

In some embodiments, the first subscribe request includes report configuration information. The report configuration information includes at least one of:
a threshold used to trigger a reporting;
a predetermined time interval for a periodic reporting; or
an immediate report identifier, used for indicating to report once a subscribe request is received.

In some embodiments, the second subscribe request includes report configuration information. The report configuration information includes at least one of:
a threshold used to trigger a reporting;
a predetermined time interval for a periodic reporting; or
an immediate report identifier, used for indicating to report once a subscribe request is received.

In embodiments of the disclosure, the AF may send the first subscribe request to the NEF. The first subscribe request includes access type information for indicating the access type. The first subscribe request is used for the NEF to send the second subscribe request to the NSACF(s). The second subscribe request is used for subscribing to the event report of the network slice associated with the access type requested by the first subscribe request. In this way, the network device (such as the AF or the NEF) may obtain, based on the subscribe request (the first subscribe request or the second subscribe request), the event report(s) of the network slice associated with the access type sent by at least one NSACF, that is the network device may obtain the network status of the network slice. This enables the network device to accurately locate and meet needs of operator's services and also enables the network device to configure resources and execute services based on the network status, thereby improving user experience satisfaction.

In some embodiments, the event report includes: a first event report and/or a second event report. Here, the second event report is determined by the NEF based on the first event report.

It is noteworthy that the first subscribe request and the second subscribe request are not in one-to-one correspondence with the first event report and the second event report respectively. The first event report is a response to the second subscribe request or the first subscribe request. The second event report is determined based on the first event report.

As illustrated in FIG. 3, embodiments of the disclosure provide a method for subscribing to and reporting a slice event based on an access type, performed by the AF. The method includes the following.

At step S31, the second event report returned by the NEF is received. The second event report is determined based on multiple first event reports. The first event report includes: statistical registration data on UEs registered to the network slice and/or statistical session data on sessions established by the network slice. The second event report includes aggregated statistical information obtained by aggregating statistical data contained in the multiple first event reports.

Here, the second event report may also be determined based on one first event report.

Determining the second event report based on at least one first event report may be: determining the second event report by the NEF based on the at least one first event report, or determining the second event report by the NSACF based on the at least one first event report.

The statistical data may include, but is not limited to, the statistical registration data and/or the statistical session data.

Here, the statistical registration data may be, but is not limited to: the number of registered UEs and/or the ratio of the number of registered UEs to the allowed maximum number of registered UEs.

Here, the statistical session data may be, but is not limited to: the number of established PDU sessions and/or the ratio of the number of established PDU sessions to the allowed maximum number of established PDU sessions.

In one embodiment, the aggregated statistical information includes statistical data contained in the at least one first event report.

In this way, in embodiments of the disclosure, by receiving, through the AF, the first event report(s) returned based on the second subscribe request by at least one NSACF or receiving, through the AF, the second event report obtained through aggregation and counting by the NEF based on the first event report(s), the AF or the NEF may accurately know the status information of the network slice associated with each access type in the network, to configure resources and execute services based on the corresponding network status.

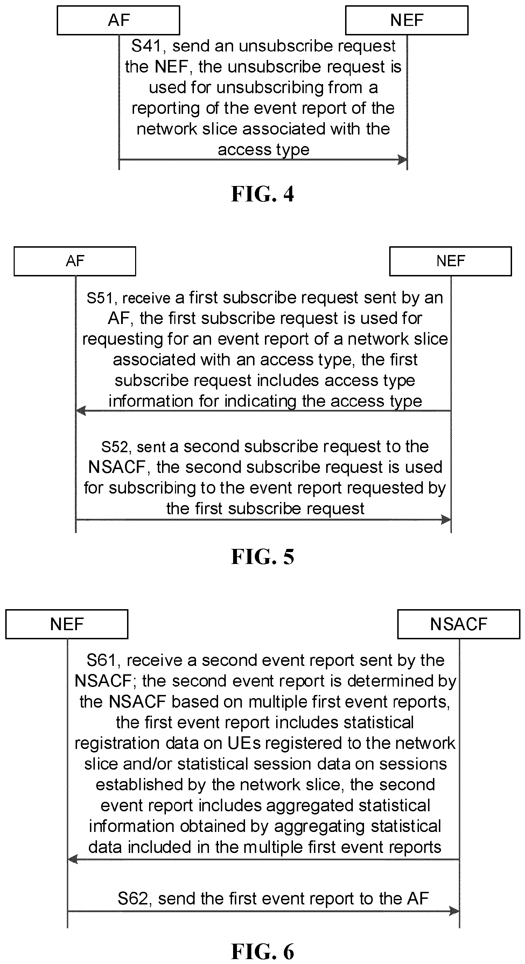

As illustrated in FIG. 4, embodiments of the disclosure provide a method for subscribing to and reporting a slice event based on an access type, performed by the AF. The method includes the following.

At step S41, an unsubscribe request is sent to the NEF. The unsubscribe request is used for unsubscribing from a reporting of the event report of the network slice associated with the access type.

In embodiments of the disclosure, the access type is the above-mentioned access type in above embodiments; and the event report is the above-mentioned event report in above embodiments.

Here, the unsubscribe request is sent by the NEF to at least one NSACF. For example, the unsubscribe request is sent by the NEF to one or more NSACFs associated with the slice identifier, or is sent by the NEF to the NSACF(s) supporting a subscribe function.

In one embodiment, the unsubscribe request includes, but is not limited to, at least one of: access type information, a slice identifier, a DNN corresponding to a slice identifier, or an application identifier.

Here, if the unsubscribe request includes the access type information, then the reporting of the event report of the network slice associated with the access type may be unsubscribed. If the unsubscribe request includes the slice identifier, then NEF may determine the NSACF(s) to which the unsubscribe request needs to be sent. If the unsubscribe request includes the application identifier, the NEF may determine the slice identifier based on the application identifier and then determine the NSACF(s) to which the unsubscribe request needs to be sent. If the unsubscribe request includes the slice identifier and the DNN corresponding to the slice identifier, then the NEF may determine the NSACF(s) to which the unsubscribe request needs to be sent and the reporting of the event report of the data network associated with the network slice is unsubscribed.

In this way, in embodiments of the disclosure, the AF sending the unsubscribe request to the NEF, so that the NEF may unsubscribe from the reporting of the event report of the network slice associated with the access type, so that the NSACF does not need to always report the event report; thereby saving the network resources and the energy consumption of the network device (such as the NEF or the NSACF).

It is noteworthy that those skilled in the art may understand that the methods according to embodiments of the disclosure may be executed independently or together with some methods in embodiments of the disclosure or some methods in related arts.

The following methods for subscribing to and reporting a slice event based on an access type are performed by the NEF, which are similar to the description of the above methods for subscribing to and reporting a slice event based on an access type performed by the AF. For technical details that are not disclosed in embodiments related to the methods for subscribing to and reporting a slice event based on an access type performed by the NEF, references may be made to the description of the methods for subscribing to and reporting a slice event based on an access type performed by the AF, which are not elaborated herein.

As illustrated in FIG. 5, embodiments of the disclosure provide a method for subscribing to and reporting a slice event based on an access type, performed by an NEF. The method includes the following.

At step S51, a first subscribe request sent by an AF is received. The first subscribe request is used for requesting for an event report of a network slice associated with an access type. The first subscribe request includes access type information for indicating the access type.

At step S52, a second subscribe request is sent to NSACF(s). The second subscribe request is used for subscribing to the event report requested by the first subscribe request.

In some embodiments of the disclosure, the first subscribe request is the first subscribe request described in the step S21, the second subscribe request is the second subscribe request described in the step S21, the event report is the event report described in the step S21; and the access type and the access type information are respectively the access type and the access type information described in the step S21.

For example, both the first subscribe request and the second subscribe request include a slice identifier. As another example, the first subscribe request includes an application identifier, and the second subscribe request includes a slice identifier.

For example, the access type information is used for indicating at least one of: the access type, a radio access type, or access assistance information. The access type indicates a 3rd Generation Partnership Project (3GPP) type and/or a non-3GPP type.

For example, the radio access type includes, but is not limited to, at least one of: an NR access type, an EUTRA type, a WLAN access type, a VIRTUAL access type, a NBIOT access type, a WIRELINE access type, a WIRELINE_CABLE access type, a WIRELINE BBF access type, an LTE-M access type, a NR_U access type, an EUTRA U access type, a TRUSTED N3GA access type, a TRUSTED WLAN access type, a UTRA access type, a GERA access type, an NR_LEO access type, an NR_MEO access type, an NR_GEO access type, or an NR_OTHER_SA access type.

For example, the first subscribe request and/or the second subscribe request includes an event identifier used for indicating the event report.

For example, the event report includes at least one of: a number of registered UEs; a number of established PDU sessions; a ratio of the number of registered UEs to an allowed maximum number of registered UEs; or a ratio of the number of established PDU sessions to an allowed maximum number of established PDU sessions.

For example, the second subscribe request includes: report configuration information. The report configuration information include: at least one of:
a threshold used to trigger a reporting;
a predetermined time interval for a periodic reporting; or
an immediate report identifier, used for indicating to report once a subscribe request is received.

In this way, in embodiments of the disclosure, the first subscribe request from the AF is received through the NEF and the second subscribe request is sent to the NSACF(s). The second subscribe request is used for subscribing to the event report of the network slice associated with the access type requested by the first subscribe request. In this way, the network device (such as the NEF) may obtain, based on the subscribe request (the second subscribe request), the event report of the network slice associated with the access type sent by at least one NSACF, that is the NEF may obtain the network status of the network slice. This facilitates the sending of the network status of the network slice to the AF for the NEF. Therefore, the network device (the AF or the NEF) configures resources and executes services correspondingly based on the network status, thereby improving user experience satisfaction.

In some embodiments, the first subscribe request includes: a slice identifier for indicating a network slice or a slice identifier and a DNN corresponding to the slice identifier.

In some embodiments, the first subscribe request includes a slice identifier for indicating a network slice;

The method includes: acquiring a slice identifier based on the first subscribe request.

For example, the NEF receives the first subscribe request and obtains the slice identifier if the slice identifier is included in the first subscribe request; and the NEF determines, based on the slice identifier, one or more NSACFs associated with the slice identifier and sends the second subscribe request to the one or more NSACFs, in which second subscribe request may be the first subscribe request.

Here, the NEF may pre-store or set a preset association relationship between the slice identifiers and the NSACFs. If the first subscribe request received by the NEF includes the slice identifier, then the NEF may determine the one or more NSACFs having the association relationship with the slice identifier based on the slice identifier and the preset association relationship.

In this way, in embodiments of the disclosure, if the NEF receives the first subscribe request including the slice identifier, the NSACF to which the second subscribe request needs to be sent may be directly determined based on the NSACF(s) associated with the slice identifier. And the first subscribe request can also be sent as the second subscribe request.

In some other embodiments, the first subscribe request includes: a slice identifier for indicating a network slice and a DNN corresponding to the slice identifier.

For example, the NEF receives the first subscribe request and obtains the slice identifier if the first subscribe request includes the slice identifier. The NEF determines one or more NSACFs associated with the slice identifier based on the slice identifier, and sends the second subscribe request to the one or more NSACFs, in which the second subscribe request may be the first subscribe request. Here, if the NEF sends the second subscribe request to the one or more NSACFs, the one or more NSACFs may be notified of a reported event of the data network name of the network slice associated with the access type that needs to be subscribed. For example, if the access type is the 3GPP type, the slice identifier is associated with the NSACF1 and the NSACF2, and the data network name is the network 1; then the event report of the network 1 associated with the 3GPP access type is subscribed to from the NSACF1 and the NSACF2, such as the number of registered UEs and/or the number of established PDU sessions of the network 1 of the 3GPP access type.

In this way, in embodiments of the disclosure, if the first subscribe request also includes the DNN corresponding to the slice identifier, the event report of the data network name associated with the access type may also be determined. In this way, the corresponding event report may be obtained at a smaller granularity.

In some embodiments, the first subscribe request includes an application identifier.

The method includes: determining a slice identifier for indicating a network slice based on the application identifier.

Embodiments of the disclosure provide a method for subscribing to and reporting a slice event based on an access type, performed by the NEF. The method includes: determining a slice identifier for identifying the network slice based on an application identifier.

Determining the slice identifier for identifying the network slice based on the application identifier includes one of:
obtaining the slice identifier corresponding to the application identifier from the NRF based on the application identifier; or
determining the slice identifier based on the application identifier and configuration information, in which the configuration information includes a correspondence between the application identifiers and the slice identifiers.

Embodiments of the disclosure provide a processing method performed by the NEF. The method includes: determining a slice identifier based on an application identifier and configuration information, in which the configuration information includes a correspondence between application identifiers and slice identifiers.

Here, the application identifier is used for identifying a service or an application.

For example, the NEF receives the first subscribe request and obtains the application identifier included in the first subscribe request. The NEF determines the slice identifier corresponding to the application identifier based on the application identifier and the configuration information; in which the configuration information includes the correspondence between the application identifiers and the slice identifiers. In this way, the NEF may determine one or more NSACFs associated with the slice identifier based on the slice identifier, and send the second subscribe request including the application identifier to the one or more NSACFs.

In this way, in embodiments of the disclosure, if the NEF does not obtain any slice identifier from the first subscribe request, the NEF may obtain the slice identifier associated with the application identifier based on the application identifier included in the first subscribe request and the configuration information included in the NEF. Furthermore, the NEF may accurately determine, based on the slice identifier, the NSACFs to which the second subscribe request needs to be sent, that is the NSACFs from which the event report needs to be subscribed to.

Embodiments of the disclosure provide a processing method performed by the NEF. The method includes acquiring a slice identifier corresponding to the application identifier based on the application identifier.

For example, the NEF receives the first subscribe request and obtains the application identifier included in the first subscribe request. The NEF sends the request message carrying the application identifier to the NRF. Or, when the NEF does not acquire any slice identifier associated with the application identifier by querying the configuration information, the NEF sends a request message carrying the application identifier to the NRF, where the request message is used for requesting for the slice identifier associated with the application identifier. The NEF receives a response message returned based on the request message by the NRF and obtains the slice identifier associated with the application identifier from the response message. Here, the NRF has the correspondence between at least one application identifier and at least one slice identifier stored or configured therein. The application identifiers included in the correspondence is more than the application identifiers included in the configuration message of the NEF.

In this way, in embodiments of the disclosure, if the NEF does not obtain any slice identifier from the first subscribe request, the NEF may obtain the slice identifier corresponding to the application identifier from the NRF. That is, the NEF may map the application identifier to the slice identifier. Further, the NEF may determine, based on the slice identifier, the NSACF(s) to which the second subscribe request needs to be sent, that is the NSACF(s) from which the event report needs to be subscribed to.

The step S52 of sending the second subscribe request to the NSACF includes one of:
sending the second subscribe request to one or more NSACFs associated with the network slice; or
sending the second subscribe request to an NSACF supporting a subscribe function.

Here, the NSACF supporting the subscribe function may be that the NSACF is able to report an event report based on a subscribe request.

Embodiments of the disclosure provide a method for subscribing to and reporting a slice event based on an access type performed by the NEF. The method may include: if a slice identifier that needs to be subscribed to is determined and the slice identifier is associated with one NSACF, sending the second subscribe request to the NSACF.

Embodiments of the disclosure provide a method for subscribing to and reporting a slice event based on an access type, performed by the NEF. The method may include: if a slice identifier that needs to be subscribed to is determined, and the slice identifier is associated with multiple NSACFs, sending the second subscribe request to at least some of the multiple NSACFs. Here, the second subscribe request may be sent to each of the multiple NSACFs or the second subscribe request may be sent to some of the multiple NSACFs.

Embodiments of the disclosure provide a method for subscribing to and reporting a slice event based on an access type, performed by the NEF. The method includes if no slice identifier that needs to be subscribed to is determined, sending the second subscribe request to the NSACF supporting the subscribe function.

For example, the NEF receives the first subscribe request. If the NEF does not determine, based on the first subscribe request, any slice identifier that needs to be subscribed to, then the NEF sends the second subscribe request to the NSACF supporting the subscribe function. Or, if the NEF determines, based on the first subscribe request, the slice identifier that needs to be subscribed to and if the NEF determines that the slice identifier is associated with one NSACF, then the NEF sends the second subscribe request to the NSACF. Or, if the NEF determines, based on the first subscribe request, the slice identifier that needs to be subscribed to and if the NEF determines that the slice identifier is associated with multiple NSACFs, then the NEF sends the second subscribe request to each of the multiple NSACFs. The second subscribe request is used for subscribing to the event report of the network slice associated with the access type requested by the first subscribe request.

In this way, in embodiments of the disclosure, the NSACF(s) to which the second subscribe request is sent may be determined based on whether the NEF has determined a network slice that needs to be subscribed to. For example, if the NEF has not determined the network slice that needs to be subscribed to, the NEF may send the second subscribe request to all NSACFs that support the subscribe function, so that a more comprehensive reporting of an event may be achieved. As another example, if the NEF has determined the network slice that needs to be subscribed to, the NEF may accurately obtain the service or the application or the event report associated with the network slice, to accurately locate and meet needs of operator's services. In addition, since there is no need to obtain event reports associated with all services or the network slices, the power consumption of the network device, such as the NSACF and the NEF, may be reduced.

It is noteworthy that those skilled in the art may understand that the methods according to embodiments of the disclosure may be executed independently or together with some methods in embodiments of the disclosure or some methods in related arts.

As illustrated in FIG. 6, embodiments of the disclosure provide a method for subscribing to and reporting a slice event based on an access type, performed by the NEF. The method may include the following.

At step S61, a second event report sent by the NSACF is received; in which the second event report is determined by the NSACF based on multiple first event reports. The first event report includes statistical registration data on UEs registered to the network slice and/or statistical session data on sessions established by the network slice. The second event report includes aggregated statistical information obtained by aggregating statistical data included in the multiple first event reports.

At step S62, the second event report is sent to the AF.

In some embodiments of the disclosure, the first event report is the first event report in the step S31; the registration statistic data is the registration statistic data in the step S31; and the session statistic data is the session statistic data in the step S31.

The step S61 of receiving the second event report sent by the NSACF includes: receiving the second event report sent by one or more NSACFs.

For example, if the network slice is associated with the NSACF1, the NSACF2, and the NSACF3; then the NEF may obtain the aggregated statistical data obtained by aggregating the statistical registration data on the UE registered to the network slice and/or the statistical session data on the sessions established by the network slice associated with the access type based on the NSACF 1, the NSACF2, and the NSACF3 and sent by one of the NSACF 1, the NSACF2, and the NSACF3. The aggregated statistical data may be regarded as the second event report.

In this way, in embodiments of the disclosure, the NEF may directly receive the second event report determined based on the first event report by the NSACF and send the second event report to the AF, so that the AF may accurately know the network status of the network slice.

The step S61 of receiving the second event report sent by NSACF includes: receiving a notification carrying the second event report sent by NSACF.

The step S61 of sending the second event report to the AF includes: sending the notification carrying the second event report to the AF.

Here, the notification may be any implementable message or signaling, and there is no limitation on the notification type here.

In this way, in embodiments of the disclosure, the second event report may be received and/or sent based on the notification, so that the original function of the notification and the notification of the reporting of the second event report may be realized through one notification, thereby improving the utilization rate of the notification and reducing the signaling overhead.

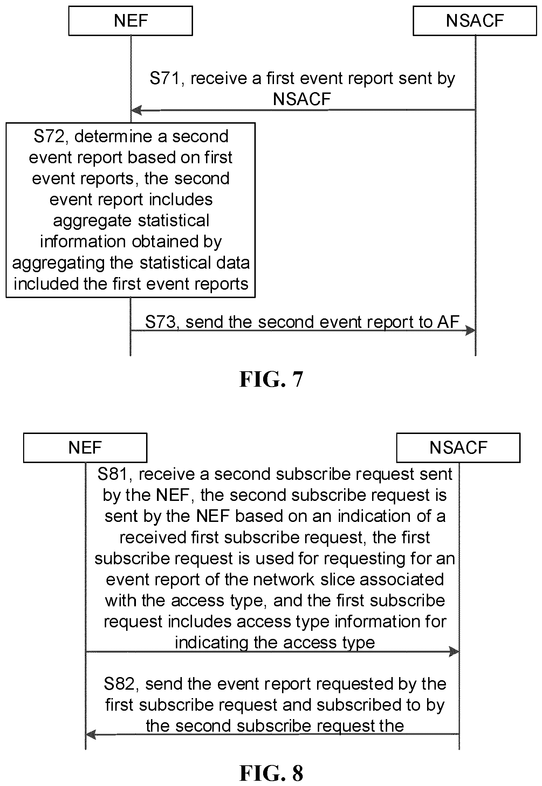

As illustrated in FIG. 7, embodiments of the disclosure provide a method for subscribing to and reporting a slice event based on an access type, performed by the NEF. The method may include the following.

At step S71, first event report(s) sent by NSACF(s) is/are received.

At step S72, a second event report is determined based on a plurality of first event reports, in which the second event report includes aggregate statistical information obtained by aggregating the statistical data included in the plurality of first event reports.

At step S73, the second event report is sent to the AF.

In some embodiments of the disclosure, the second event report is the second event report in the step S31; the statistical data is the statistical data in the step S31; and the aggregated statistical information is the aggregated statistical information in the step S31.

For example, if the network slice is associated with the NSACF1, the NSACF2, and the NSACF3, then the NEF may obtain the statistical registration data on the UEs registered to the network slice and/or the statistical session data on the sessions established by the network slice associated with the access type sent by the NSACF 1, the NSACF2, and the NSACF3 respectively; aggregate the statistical registration data and/or the statistical session data from the NSACF 1, the statistical registration data and/or the statistical session data from the NSACF2, and the statistical registration data and/or the statistical session data from the NSACF3 into the second event report; and send the second incident report is sent to AF.

The step S71 of receiving the first event report sent by the NSACF includes: receiving the first event report sent by one or more NSACFs.

The step S72 of determining the second event report based on the multiple first event reports may be: aggregating the multiple first event reports to obtain the second event report.

The aggregation method in the step S72 may be determined based on the operator's policy or configured by the NEF. For example, if a slice identifier is associated with multiple NSACFs, the operator's policy is: using one NSACF among the multiple NSACFs as a master NSACF and using the other NSACFs as slave NSACFs. For example, the slice identifier of a network slice is associated with the NSACF1, the NSACF2, and the NSACF3; the operator's policy is: using the NSACF1 as the master NSACF, and both the NSACF2 and the NSACF3 as the slave NSACFs. Then the aggregated statistical information included in the second event report determined by the NEF may include the aggregated information obtained by aggregating the statistical data of the master NSACF (e.g., the NSACF1) and the salve NSACFs (e.g., the NSACF2 and the NSACF3).

The aggregation way in the step S72 may be performed by the NSACF. For example, the NSACF aggregates multiple first event reports into the second event report. The NEF receives the second event report sent by the NSACF. For example, if one slice identifier is associated with multiple NSACFs, the operator's policy is selecting one of the multiple NSACFs as a proxy NSACF. For example, the slice identifier of one network slice is associated with the NSACF1, the NSACF2, and the NSACF3; the operator's policy is selecting one of the NSACF1, the NSACF2, and the NSACF3 as the proxy NSACF, for example the NSACF 1 is selected as the proxy NSACF. The NSACF1 obtains the first event reports from the NSACF 1, the NSACF2 and the NSACF3, and aggregates the first event reports from the NSACF 1, the NSACF2 and the NSACF3 to obtain the second event report including the aggregated statistical information. The NEF receives the second event report sent by the NSACF 1, and the aggregated statistical information included in the second event report may include statistical data from the NSACF1, the NSACF2, and the NSACF3.

Certainly, the aggregation way may be any other implementable manner, which is not limited here.

In this way, in embodiments of the disclosure, the first event report(s) from the NSACF(s) may be received by the NEF, and the first event reports may be aggregated to obtain an aggregated second event report and send the second event report to the AF. In this way, the AF may accurately know the network status of the network slice and at the same time obtain clearer the network status information (that is, the second event report). Therefore, the network device, such as the AF, may more reasonably configure corresponding resources and perform operations such as services.

The step S71 of receiving the first event report sent by the NSACF includes: receiving a notification carrying the first event report sent by the NSACF.

The step S73 of sending the second event report to the AF includes: sending the notification carrying the second event report to the AF.

Here, the notification may be any implementable message or signaling, and there is no limitation on the notification type here.

In this way, in embodiments of the disclosure, the first event report(s) and send the second event report may be received based on the notification, so that the original function of the notification and the notification of reporting the first event report(s) may be realized through one notification; thereby improving the utilization rate of the notification and reducing the signaling overhead.

Embodiments of the disclosure provide a method for subscribing to and reporting a slice event based on an access type, performed by the NEF. The method includes sending a second event report carrying a slice identifier to the AF. Here, if the first subscribe request received by the NEF includes the slice identifier, the NEF may determine that the AF is a trusted third party; and then the NEF may send the second event report carrying the slice identifier to the AF.

Embodiments of the disclosure provide a method for subscribing to and reporting a slice event based on an access type, performed by an NEF. The method includes: sending the second event report carrying an application identifier to an AF. Here, if the first subscribe request received by the NEF does not include any slice identifier but includes the application identifier, the NEF may determine that the AF is an untrustworthy third party. After the NEF obtains the first event report(s) from the at least one NSACF, the NEF may map the slice identifier corresponding to the NSACF(s) into an application identifier, and send the second event report carrying the application identifier to the AF.

Here, the method of mapping the slice identifier into the application identifier is similar to the method of determining the slice identifier based on the application identifier in above embodiments. For example, the method may be, but is not limited to: determining the slice identifier based on the slice identifier and the configuration information, in which the configuration information includes a correspondence between application identifiers and slice identifiers. Or, the method may be obtaining, based on the slice identifier, the application identifier corresponding to the slice identifier from the NRF.

It is noteworthy that those skilled in the art may understand that the methods according to embodiments of the disclosure may be executed independently or together with some methods in embodiments of the disclosure or some methods in related arts.

Embodiments of the disclosure provide a method for subscribing to and reporting a slice event based on an access type, performed by the NEF. The method includes
receiving an unsubscribe request sent by the AF; and
sending the unsubscribe request to the NSACF. The unsubscribe request is used for unsubscribing from a reporting of the event report of the network slice associated with the access type.

In some embodiments of the disclosure, the unsubscribe request is the unsubscribe request in the step S41; the access type is the access type described in above embodiments; the event report includes the first event report or the second event report; the first event report is the first event report described in above embodiments, and the second event report is the second event report described in above embodiments.

In this way, in embodiment of the disclosure, the unsubscribe request from the AF may be received by the NEF and sent to the NSACF, so that the NEF does not need to always send the first event report(s) or the second event report to the AF, or the NSACF does not need to always to send the first event report(s) to the NEF. Thus, the network resources and the energy consumption of the network device (such as the NEF or the NSACF) may be reduced.

It is noteworthy that those skilled in the art may understand that the methods according to embodiments of the disclosure may be executed independently or together with some methods according to embodiments of the disclosure or some methods in related arts.

The following methods for subscribing to and reporting a slice event based on an access type are performed by the NSACF, which are similar to the description of the methods for subscribing to and reporting a slice event based on an access type performed by the AF and the NEF. For technical details that are not disclosed in embodiments related to the methods for subscribing to and reporting a slice event based on an access type performed by the NSACF, references may be made to the description of the methods for subscribing to and reporting a slice event based on an access type performed by the AF and the NEF, which are not elaborated herein.

As illustrated in FIG. 8, embodiments of the disclosure provide a method for subscribing to and reporting a slice event based on an access type, performed by the NSACF. The method includes the following.

At step S81, a second subscribe request sent by the NEF is received. The second subscribe request is sent by the NEF based on an indication of a received first subscribe request, the first subscribe request is used for requesting for an event report of the network slice associated with the access type, and the first subscribe request includes access type information for indicating the access type.

At step S82, the event report requested by the first subscribe request and subscribed to by the second subscribe request is sent to the NEF.

Here, there are one or more NSACFs. For example, if there is only one NSACF that supports the subscribe function or only one NSACF associated with the slice identifier, the step S81 may be that the one NSACF receives the second subscribe request sent by the NEF and the step S82 may be that the one NSACF sends the event report of the network slice associated with the access type subscribed to by the second subscribe request to the NEF. As another example, there are multiple NSACFs that may support the subscribe function or multiple NSACFs that are associated with the slice identifier. For example, if the multiple NSACFs are NSACF 1, NSACF2, ... NSACFn, where n is an integer greater than 1; then the step S81 may be that the NSACF1, the NSACF2, ... the NSACFn receive the second subscribe request sent by NEF; and the step S82 may be that the NSACF 1, the NSACF2, ... the NSACFn all send event report of the network slice associated with the access type subscribed to by the second subscribe request to the NEF.

In some embodiments of the disclosure, the first subscribe request is the first subscribe request in the step S21; the second subscribe request is the second subscribe request in the step S21; the event report is the event report in the step S21; the access type and the access type information are respectively the access type and the access type information in the step S21.

For example, both the first subscribe request and the second subscribe request include: a slice identifier. In another example, the first subscribe request includes an application identifier, and the second subscribe request includes a slice identifier.

For example, both the first subscribe request and the second subscribe request include: a slice identifier and a DNN corresponding to the slice identifier.

For example, the access type information is used for indicating at least one of: the access type indicating a 3GPP type and/or a non-3GPP type; a radio access type; or an access assistance information.

For example, the radio access type includes, but is not limited to, at least one of: an NR access type, an EUTRA access type, a WLAN access type, a VIRTUAL access type, an NBIOT access type, a WIRELINE access type, a WIRELINE_CABLE access type, a WIRELINE_BBF access type, an LTE-M access type, an NR_U access type, an EUTRA_U access type, a TRUSTED N3GA access type, a TRUSTED WLAN access type, a UTRA access type, a GERA access type, an NR_LEO access type, an NR_MEO Access type, an NR_GEO access type, or an NR_OTHER_SA access type.

For example, the event report includes at least one of: the number of registered UEs; the number of established PDU sessions; the ratio of the number of registered UEs to the allowed maximum number of registered UEs; or the ratio of the number of established PDU sessions to the allowed maximum number of established PDU sessions. Here, the event report includes a first event report.

In some embodiments of the disclosure, the first event report and the second event report are respectively the first event report and the second event report in above-mentioned embodiments. The statistical registration data, the statistical session data and aggregated statistical information are respectively the statistical registration data, the statistical session data and the aggregated statistical information in above-mentioned embodiments.

The step S82 includes:
sending a first event report to the NEF; in which the first event report includes: statistical registration data on UEs registered to the network slice and/or statistical session data on sessions established by the network slice.

Embodiment of the disclosure provide a method for subscribing to and reporting a slice event based on an access type, performed by the NSACF. The method includes sending a first event report to the NEF; in which the first event report includes: statistical registration data on UEs registered to the network slice and/or statistical session data on sessions established by the network slice.

The step S82 includes:
obtaining a plurality of first event reports; in which the first event report includes statistical registration data on UEs registered to the network slice and/or statistical session data on sessions established by the network slice;
determining a second event report based on the first event reports; in which the second event report includes aggregate statistical information obtained by aggregating statistical data included in the plurality of first event reports; and
sending the second event report to the NEF.

Embodiments of the disclosure provide a method for subscribing to and reporting a slice event based on an access type, performed by the NSACF. The method includes:
obtaining a plurality of first event reports; in which the first event report includes: statistical registration data on UEs registered to the network slice and/or statistical session data on sessions established by the network slice;
determining a second event report based on the first event reports; in which the second event report includes aggregate statistical information obtained by aggregating statistical data included in the plurality of first event reports; and
sending the second event report to the NEF.

Embodiments of the disclosure provide a method for subscribing to and reporting a slice event based on an access type, performed by the NSACF. The method includes the following.

For example, both the first subscribe request and the second subscribe request may include: report configuration information.

Embodiments of the disclosure provide a method for subscribing to and reporting a slice event based on an access type, performed by the NSACF. The method includes:
receiving an unsubscribe request sent by NEF; and
determining, based on the unsubscribe request, not to report the reporting of the event report associated with the access type.

The second subscribe request includes the report configuration information. The report configuration information includes at least one of:
a threshold used to trigger a reporting;
a predetermined time interval for a periodic reporting; or
an immediate report identifier, used for indicating to report once a subscribe request is received.

The step S81 includes one of:
sending the event report of the network slice associated with the access type to the NEF based on the NSACF meeting the threshold used to trigger the reporting;
sending the event report of the network slice associated with the access type to the NEF based on the predetermined time interval; or
sending the event report of the network slice associated with the access type to the NEF based on the immediate report identifier being included in the second subscribe request.

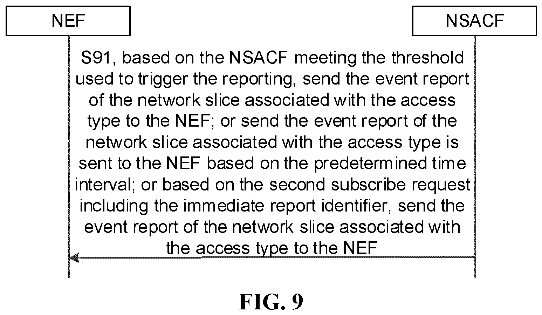

As illustrated in FIG. 9, embodiments of the disclosure provide a method for subscribing to and reporting a slice event based on an access type, performed by the NSACF. The method includes the following.

At step S91, based on the NSACF meeting the threshold used to trigger the reporting, the event report of the network slice associated with the access type is sent to the NEF; or the event report of the network slice associated with the access type is sent to the NEF based on the predetermined time interval; or based on the second subscribe request including the immediate report identifier, the event report of the network slice associated with the access type is sent to the NEF.

Here, the threshold may be a time threshold or a threshold for an event triggering. As an example, if the threshold is a first time, then when the current time where the NSACF is on reaches the first time, it is determined that the NSACF meets the threshold used to trigger the reporting. As another example, if the threshold is the threshold for the event triggering, such as the threshold for the number of registered UEs; then when the NSACF determines that the number of currently registered UEs is greater than or equal to the threshold for the number of registered UEs, it is determined that the NSACF meets the threshold used to trigger the reporting.

Here, both the threshold and the predetermined time interval may be determined by the AF or other network devices, or may be determined through a radio communication protocol.

Here, the immediate report identifier is used for instructing the NSACF to report the event report. The immediate report identifier may be predetermined bit(s). For example, the immediate report identifier is "000" or the like.

For example, the NSACF receives the second subscribe request. If it is determined that the second subscribe request includes a threshold for the number of registered UEs, then the NSACF determines whether the number of currently registered UEs is greater than the threshold for the number of registered UEs. If the NSACF determines that the number of currently registered UEs is greater than or equal to the threshold for the number of registered UEs, then the NSACF sends the first event report of the network slice associated with the access type to the NEF. In this way, embodiments of the disclosure may achieve the reporting of the event report when the NSACF meets the threshold.

For example, the NSACF receives the second subscribe request. If it is determined that the second subscribe request includes a predetermined time interval, then the NSACF sends the first event report of the network slice associated with the access type to the NEF at the predetermined time interval. In this way, embodiments of the disclosure may achieve the periodic reporting of the event report.

For example, the NSACF receives the second subscribe request. If it is determined that the second subscribe request includes an immediate report identifier, the NASCF sends for one time the first event report of the network slice associated with the access type to the NEF. In this way, embodiments of the disclosure may report the event report every time the second subscribe request including the immediate report identifier is received.

In this way, in embodiments of the disclosure, the second subscribe request may carry the report configuration information used for triggering the reporting, such as the threshold used to trigger the reporting, the predetermined time interval for the periodic reporting and/or the immediate report identifier, such that a condition for the NSACF to report the event report is determined. When the condition is met, the event report is reported. In this way, the reporting of the event report may be realized in various ways, which is applied to more application scenarios of the event report.

In order to further explain embodiments of the disclosure, several specific embodiments will be described below.

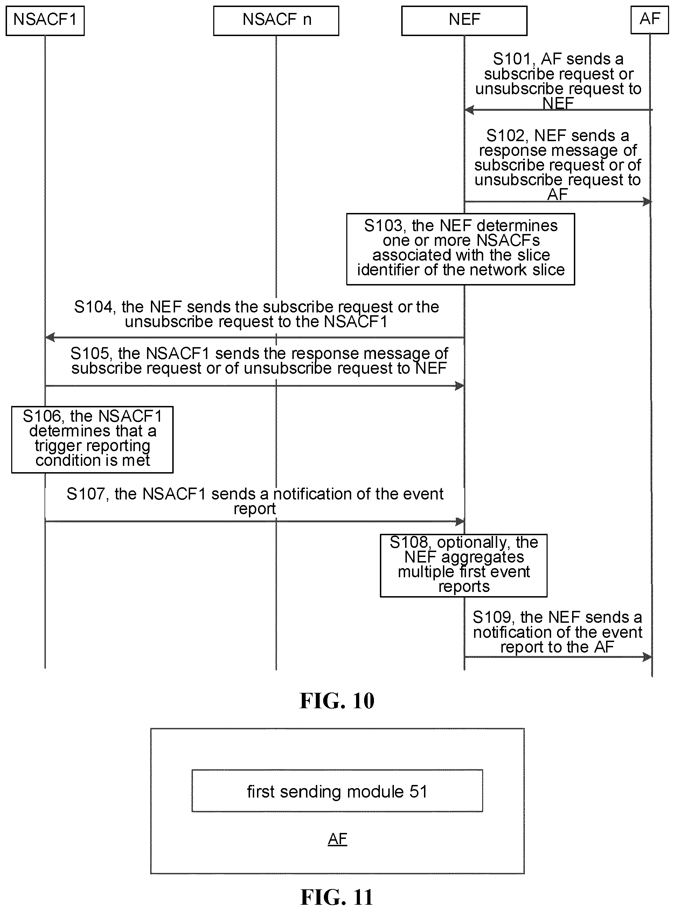

As illustrated in FIG. 10, embodiments of the disclosure provide a method for subscribing to and reporting a slice event based on an access type, performed by communication devices. The method includes the following.

Here, the communication device may include, but is not limited to: an AF, an NEF or an NSACF. The NSACF may include an NSACF 1, an NSACF2, ... an NSACFn; where n is an integer greater than 0.

At step S101, the AF sends a subscribe request or unsubscribe request to the NEF.

In some embodiments, the AF sends a first subscribe request or an unsubscribe request to the NEF. The first subscribe request or the unsubscribe request includes access type information for indicating an access type. The first subscribe request is used for requesting for the event report of the network slice of the access type. The unsubscribe request is used for unsubscribing from the reporting of the event report of the network slice associated with the access type.

Here, the first subscribe request may include at least one of: an event identifier, the access type information, or report configuration information.

Here, the event identifier is used for indicating at least one of: the number of registered UEs, the number of established PDU sessions, the ratio of the number of registered UEs to the allowed maximum number of registered UEs, the ratio of the number of established PDU sessions to the allowed maximum number of established PDU sessions.

Here, the access type information is used for indicating at least one of: the access type, a radio access type, access assistance information for the access type and/or the radio access type. The access type includes a 3GPP type and/or a non-3GPP type. The radio access type includes at least one of: an NR access type, an EUTRA access type, a WLAN access type, a VIRTUAL access type, an NBIOT access type, a WIRELINE access type, a WIRELINE_CABLE access type, a WIRELINE_BBF access type, an LTE-M access type, an NR_U access type, an EUTRA U access type, a TRUSTED N3GA access type, a TRUSTED WLAN access type, a UTRA access type, a GERA access type, an NR_LEO access type, an NR_MEO access type, an NR_GEO access type, or an NR_OTHER_SA access type.

Here, the report configuration information includes at least one of: a threshold used to trigger a reporting; a predetermined time interval for a periodic reporting; or an immediate report identifier used for indicating to report once a subscribe request is received.

Here, the unsubscribe request may include the event identifier and/or access type information in the foregoing embodiments.

At step S102, the NEF sends a response message of the subscribe request or a response message of the unsubscribe request to the AF.

Here, the response message of the subscribe request is used for confirming that the NEF has received the subscribe request. The response message of the unsubscribe request is used for confirming that the NEF has received the unsubscribe request.

At step S103, the NEF determines one or more NSACFs associated with the slice identifier of the network slice.

In some embodiments, if the subscribe request or the unsubscribe request carries a slice identifier, the NEF may find one or more NSACFs associated with the slice identifier based on the slice identifier. Or, if the subscribe request or the unsubscribe request carries an application identifier, the NEF determines the slice identifier based on the application identifier, and finds one or more NSACFs associated with the slice identifier based on the slice identifier.

At step S104, the NEF sends the subscribe request or the unsubscribe request to the NSACF1.

In some embodiments, if the NEF determines that the slice identifier is associated with the NSACF1, the NEF sends the second subscribe request or the unsubscribe request to the NSACF1. Here, the second subscribe request may be the first subscribe request or may be a request determined based on the first subscribe request.

In some embodiments, if no slice identifier is determined by the NEF, the NEF sends the subscribe request or the unsubscribe request to the NSACF 1, the NSACF 1, ... and the NSACF n that support the subscribe function. Or, if the NEF determines that the slice identifier is associated with multiple NSACFs among the NSACF1 , the NSACF2 , ... and the NSACFn, the NEF sends the subscribe request or the unsubscribe request to the multiple NSACFs.

At step S105, the NSACF1 sends the response message of the subscribe request or the response message of the unsubscribe request to the NEF.

At step S106, the NSACF 1 determines that a trigger reporting condition is met.

In some embodiments, if the NSACF 1 determines that the NSACF 1 currently reaches the threshold used to trigger the reporting or reaches the end time of each predetermined time interval, or determines that the subscribe request includes the immediate report identifier, the NSACF1 determines that the trigger reporting condition is met.

At step S107, the NSACF 1 sends a notification of the event report.

In some embodiments, the NSACF 1 sends a notification of the first event report. The notification carries statistical registration data and/or statistical session data of the event report, and/or the access type information.

At optical step S108, the NEF aggregates multiple first event reports.

In some embodiments, if multiple NSACFs send the first event reports to the NEF, then the multiple first event reports are aggregated to obtain the second event report. The second event report includes aggregated statistical information obtained by aggregating statistical data included in multiple first event reports.

At step S109, the NEF sends a notification of the event report to the AF.

In some embodiments, if the NEF does not perform the step S108, the NEF sends the notification of the first event report to the AF. If the NEF performs the step S108, the NEF sends the notification of the second event report to the AF.

As illustrated in FIG. 11, embodiments of the disclosure provide an apparatus for subscribing to and reporting a slice event based on an access type, applied to an AF. The apparatus includes a first sending module 51.

The first sending module 51 is configured to send a first subscribe request to the NEF to request for an event report of a network slice associated with an access type. The first subscribe request includes access type information for indicating the access type. The first subscribe request is used for instructing the NEF to send, to the NSACF, a second subscribe request for subscribing to the event report requested by the first subscribe request.

Embodiments of the disclosure provide an apparatus for subscribing to and reporting a slice event based on an access type, applied to an AF. The method includes a first receiving module configured to receive a second event report returned by the NEF. The second event report is based on a plurality of first event reports. The first event report includes: statistical registration data on UEs registered to the network slice and/or statistical session data on sessions established by the network slice. The second event report includes: aggregated statistical information obtained by aggregating the statistical data included in the plurality of first event reports.

Embodiments of the disclosure provide an apparatus for subscribing to and reporting a slice event based on an access type, applied to an AF. The apparatus includes a first receiving module configured to receive a second event report returned by the NEF. The second event report includes: aggregated statistical information obtained by aggregating the statistical data included in the plurality of first event reports.

Embodiments of the disclosure provide an apparatus for subscribing to and reporting a slice event based on an access type, applied to an AF. The apparatus includes a first sending module 51 configured to send an unsubscribe request to the NEF. The unsubscribe request is used for unsubscribing from the reporting of the event report of the network slice associated with the access type.

In some embodiments, the access type information indicates at least one of:
the access type, indicating a 3GPP type and/or a non-3GPP type;
a radio access type; or
access assistance information.

In some embodiments, the access type information indicates at least one of:
the access type;
a radio access type; or
access assistance information.

In some embodiments, the access type includes: a 3GPP type and/or a non-3GPP type.

In some embodiments, the radio access type includes at least one of:
an NR access type, an EUTRA access type, a WLAN access type, a VIRTUAL access type, an NBIOT access type, a WIRELINE access type, a WIRELINE _CABLE access type, a WIRELINE_BBF access type, an LTE-M access type, an NR_U access Type, an EUTRA U access type, a TRUSTED N3GA access type, a TRUSTED WLAN access type, a UTRA access type, a GERA access type, an NR_LEO access type, an NR_MEO access type, an NR_GEO access type, or an NR_OTHER_SA access type.

In some embodiments, the first subscribe request or the second subscribe request includes: an event identifier for identifying the event report.

In some embodiments, the event report includes at least one of:
a number of registered UEs;
a number of established PDU sessions;
a ratio of a number of registered UEs to an allowed maximum number of registered UEs; or
a ratio of a number of established PDU sessions to an allowed maximum number of established PDU sessions.

In some embodiments, the first subscribe request includes one of:
a slice identifier for identifying the network slice; or
an application identifier used for determining the slice identifier associated with the application identifier.

The slice identifier is used for the NEF to determine one or more NSACFs associated with the slice identifier.

In some embodiments, the first subscribe request includes:
a slice identifier, and a DNN corresponding to the slice identifier.

In some embodiments, the first subscribe request includes report configuration information. The report configuration information includes at least one of:
a threshold used to trigger a reporting;
a predetermined time interval for a periodic reporting; or
an immediate report identifier, used for indicate to report once a subscribe request is received.

It is noteworthy that those skilled in the art may understand that the apparatuses in embodiments of the disclosure may be implemented independently or together with some apparatuses in embodiments of the disclosure or apparatuses in related arts.

Regarding the apparatuses in foregoing embodiments, the specific manner in which each module executes operations has been described in detail in embodiments related to the methods, which will not be described in detail here.

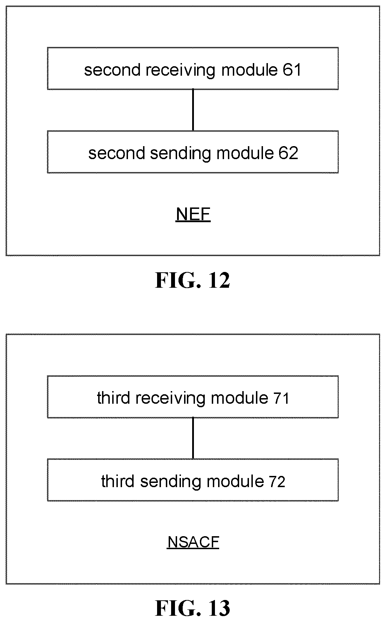

As illustrated in FIG. 12, embodiments of the disclosure provide an apparatus for subscribing to and reporting a slice event based on an access type, applied to an NEF. The apparatus includes a second receiving module 61 and a second sending module 62.

The second receiving module 61 is configured to receive the first subscribe request sent by AF. The first subscribe request is used for requesting for an event report of a network slice associated with the access type. The first subscribe request includes access type information for indicating the access type.

The second sending module 62 is configured to send a second subscribe request to the NSACF. The second subscribe request is used for subscribing to the event report requested by the first subscribe request.

In some embodiments, sending the second subscribe request to the NSACF includes one of:
sending the second subscribe request to one or more NSACFs associated with the network slice; or
sending the second subscribe request to the NSACF supporting a subscribe function.

Embodiments of the disclosure provide an apparatus for subscribing to and reporting a slice event based on an access type, applied to an NEF. The apparatus includes: a second sending module 62 configured to send the second subscribe request to one or more NSACFs associated with the network slice.

Embodiments of the disclosure provide an apparatus for subscribing to and reporting a slice event based on an access type, applied to an NEF. The apparatus includes: a second sending module 62 configured to send the second subscribe request to the NSACF supporting a subscribe function.

In some embodiments, the first subscribe request includes:
a slice identifier for indicating the network slice; or
a slice identifier for indicating the network slice and a DNN corresponding to the slice identifier.

In some embodiments, the first subscribe request includes an application identifier.

Embodiments of the disclosure provide an apparatus for subscribing to and reporting a slice event based on an access type, applied to an NEF. The apparatus includes: a processing module configured to determine a slice identifier for identifying the network slice based on the application identifier.

Embodiments of the disclosure provide an apparatus for subscribing to and reporting a slice event based on an access type, applied to an NEF. The apparatus includes a processing module configured to obtain a slice identifier corresponding to the application identifier from the NRF based on the application identifier.

Embodiments of the disclosure provide an apparatus for subscribing to and reporting a slice event based on an access type, applied to an NEF. The apparatus includes: a processing module configured to determine a slice identifier based on an application identifier and configuration information, in which the configuration information includes a correspondence between the application identifier and the slice identifier.

Embodiments of the disclosure provide an apparatus for subscribing to and reporting a slice event based on an access type, applied to an NEF. The apparatus includes: a second receiving module 61 configured to receive an unsubscribe request sent by the AF.

The second sending module 62 is configured to send the unsubscribe request to the NSACF. The unsubscribe request is used for unsubscribing from a reporting of the event report of the network slice associated with the access type.

Embodiments of the disclosure provide an apparatus for subscribing to and reporting a slice event based on an access type, applied to an NEF. The apparatus includes: a second receiving module 61 configured to receive a second event report sent by the NSACF. The second event report is determined based on a plurality of first event reports by the NSACF. The first event report includes: statistical registration data on UEs registered to the network slice and/or statistical session data on sessions established by the network slice. The second event report includes aggregated statistical information obtained by aggregating statistical data contained in the plurality of first event reports.

The second sending module 62 is configured to send the second event report to the AF.

Embodiments of the disclosure provide an apparatus for subscribing to and reporting a slice event based on an access type, applied to an NEF. The apparatus includes: a second receiving module 61 configured to receive the first event report(s) sent by NSACF(s).

The processing module is configured to determine a second event report based on the plurality of first event reports. The second event report includes aggregated statistical information obtained by aggregating statistical data contained in the plurality of first event reports.

The second sending module 63 is configured to send the second event report to the AF.

In some embodiments, the access type information indicates at least one of:
the access type, indicating a 3GPP type and/or a non-3GPP type;
a radio access type; or

Access assistance information.

In some embodiments, the radio access type includes at least one of:
an NR access type, an EUTRA type, a WLAN access type, a VIRTUAL access type, a NBIOT access type, a WIRELINE access type, a WIRELINE_CABLE access type, a WIRELINE_BBF access type, an LTE-M access type, a NR_U access type, an EUTRA U access type, a TRUSTED N3GA access type, a TRUSTED WLAN access type, a UTRA access type, a GERA access type, an NR_LEO access type, an NR_MEO access type, an NR_GEO access type, or an NR_OTHER_SA access type.

In some embodiments, the event report includes at least one of:
a number of registered UEs;
a number of established PDU sessions;
a ratio of the number of registered UEs to an allowed maximum number of registered UEs; or
a ratio of the number of established PDU sessions to an allowed maximum number of established PDU sessions.

In some embodiments, the second subscribe request includes: report configuration information. The report configuration information includes at least one of:
a threshold used to trigger a reporting;
a predetermined time interval for a periodic reporting; or
an immediate report identifier, used for indicating to report once a subscribe request is received.

It is noteworthy that those skilled in the art may understand that the apparatuses according to embodiments of the disclosure may be implemented independently or together with some apparatuses in embodiments of the disclosure or apparatuses in related arts.

Regarding the apparatuses in foregoing embodiments, the specific manner in which each module executes operations has been described in detail in embodiments related to the methods, which will not be described in detail here.

As illustrated in FIG. 13, embodiments of the disclosure provide an apparatus for subscribing to and reporting a slice event based on an access type, applied to an NSACF. The apparatus includes a third receiving module 71 and a third sending module 72.

The third receiving module 71 is configured to receive the second subscribe request sent by NEF. The second subscribe request is sent by NEF based on an indication of a received first subscribe request. The first subscribe request includes access type information for indicating the access type.

The third sending module 72 is configured to send the event report requested by the first subscribe request and subscribed to by the second subscribe request to the NEF.

Embodiments of the disclosure provide an apparatus for subscribing to and reporting a slice event based on an access type, applied to an NSACF. The apparatus includes: a third sending module configured to send a first event report to the NEF. The first event report includes: statistical registration data on UEs registered to the network slice and/or statistical session data on sessions established by the network slice.

Embodiments of the disclosure provide an apparatus for subscribing to and reporting a slice event based on an access type, applied to an NSACF. The apparatus includes: a third receiving module 71, a processing module, and a third sending module 72.

The third receiving module 71 is configured to acquire a plurality of first event reports. The first event report includes: statistical registration data on UEs registered to the network slice and/or statistical session data on sessions established by the network slice.

The processing module is configured to determine a second event report based on the first event reports. The second event report includes aggregated statistical information obtaining by aggregating statistical data included in the plurality of first event reports.

The third sending module 72 is configured to send the second event report to the NEF.

Embodiments of the disclosure provide an apparatus for subscribing to and reporting a slice event based on an access type, applied to an NSACF. The apparatus includes: a third receiving module 71 and a third sending module 72. The third receiving module 71 is configured to receive an unsubscribe request sent by NEF.

The third sending module 72 is configured to determine not to report the event report associated with the access type based on the unsubscribe request.

In some embodiments, the second subscribe request includes report configuration information. The report configuration information includes at least one of:
a threshold used to trigger a reporting;
a predetermined time interval for a periodic reporting; or
an immediate report identifier, used for indicating to report once a subscribe request is received.

Embodiments of the disclosure provide an apparatus for subscribing to and reporting a slice event based on an access type, applied to an NSACF. The apparatus includes: a third sending module 72 configured to perform at least one of:
based on the NSACF meeting the threshold used to trigger the reporting, sending the event report of the network slice associated with the access type to the NEF;
sending the event report of the network slice associated with the access type to the NEF based on the predetermined time interval; or
based on the second subscribe request including the immediate report identifier, sending the event report of the network slice associated with the access type to the NEF.

In some embodiments, the event report includes at least one of:
a number of registered UEs;
a number of established PDU sessions;
a ratio of the number of registered UEs to an allowed maximum number of registered UEs; or
a ratio of the number of established PDU sessions to an allowed maximum number of established PDU sessions.

In some embodiments, the access type information indicates at least one of:
the access type, indicating a 3GPP type or a non-3GPP type;
a radio access type; or
access assistance information.

In some embodiments, the radio access type includes at least one of:
an NR access type, an EUTRA type, a WLAN access type, a VIRTUAL access type, a NBIOT access type, a WIRELINE access type, a WIRELINE _CABLE access type, a WIRELINE_BBF access type, an LTE-M access type, a NR_U access type, an EUTRA U access type, a TRUSTED N3GA access type, a TRUSTED WLAN access type, a UTRA access type, a GERA access type, an NR_LEO access type, an NR_MEO access type, an NR_GEO access type, or an NR_OTHER_SA access type.

It is noteworthy that those skilled in the art may understand that the apparatuses according to embodiments of the disclosure may be implemented independently or together with some apparatuses in embodiments of the disclosure or apparatuses in related arts.

Regarding the apparatuses in foregoing embodiments, the specific manner in which each module executes operations has been described in detail in embodiments related to the methods, which will not be described in detail here.

Embodiments of the disclosure provide a device for subscribing to and reporting a slice event based on an access type. The device includes:
a processor; and
a memory for storing instructions executable by the processor;
in which the processor is configured to implement the method in any embodiment of the disclosure when running the executable instructions.

In one embodiment, the device for subscribing to and reporting a slice event based on an access type is applied to a communication device. In another embodiment, the device for subscribing to and reporting a slice event based on an access type is a communication device.

In an embodiment, the communication device may include, but is not limited to, at least one of: a core network device, an access network device, or a UE. Here, the access network device includes: a base station. The core network device includes an AF, an NEF, or an NSACF in above embodiments.

The processor may include various types of storage media, which are non-transitory computer storage media, and may continue to memorize and store information thereon after the UE is powered off.

The processor may be connected to the memory through a bus, for reading the executable program stored on the memory, for example, at least one of the methods illustrated in FIGS. 2 to 10.

Embodiment of the disclosure further provide a computer storage medium. The computer storage medium has a computer-executable program stored thereon. When the executable program is executed by a processor, the method of any embodiment of the disclosure is performed, such as at least one of the methods illustrated in FIG. 2 to FIG. 10.

With regard to the device or storage medium in above embodiments, the specific manner in which each module executes operations has been described in detail in embodiments related to the methods, which will not be described in detail here.

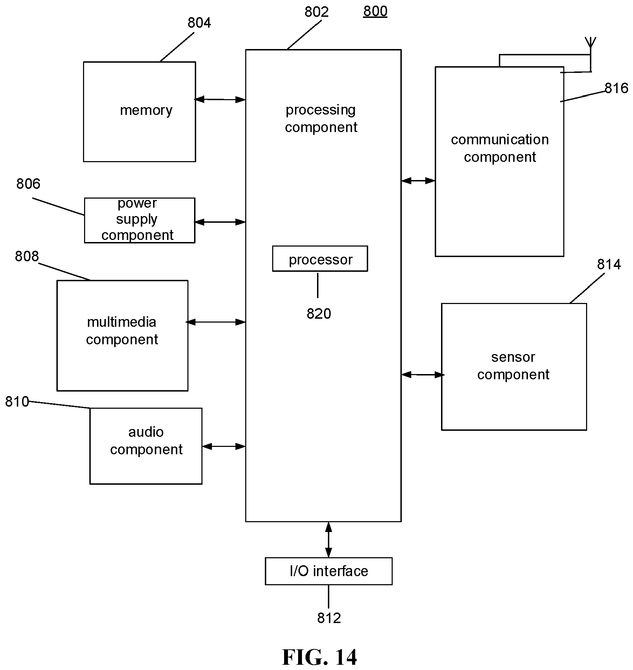

FIG. 14 is a block diagram illustrating a UE 800 according to an exemplary embodiment. For example, the UE 800 may be a mobile phone, computer, digital broadcast user equipment, messaging device, game console, tablet device, medical device, fitness device, personal digital assistant, or the like.

As illustrated in FIG. 14, the UE 800 may include one or more of: a processing component 802, a memory 804, a power supply component 806, a multimedia component 808, an audio component 810, an input/output (I/O) interface 812, a sensor component 814, or a communication component 816.

The processing component 802 generally controls the overall operations of the UE 800, such as those associated with display, telephone calls, data communications, camera operations, and recording operations. The processing component 802 may include one or more processors 820 to execute instructions to complete all or part of the steps of above methods. In addition, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of such data include instructions for any application or method operating on the UE 800, contact data, phonebook data, messages, pictures, videos, or the like. The memory 804 may be implemented by any type of volatile or non-volatile storage device or their combination, such as static random access memory (SRAM), electrically erasable programmable read-only memory (EEPROM), erasable Programmable Read Only Memory (EPROM), Programmable Read Only Memory (PROM), Read Only Memory (ROM), Magnetic Memory, Flash Memory, Magnetic or Optical Disk.

The power supply component 806 provides power to various components of the UE 800. The power supply components 806 may include a power management system, one or more power supplies, and other components associated with generating, managing, and distributing power for the UE 800.

The multimedia component 808 includes a screen providing an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also detect duration and pressure associated with the touch or swipe action. In some embodiments, the multimedia component 808 includes a front-facing camera and/or a rear-facing camera. When the UE 800 is in an operation mode, such as a shooting mode or a video mode, the front-facing camera and/or the rear-facing camera may receive external multimedia data. Each front-facing camera and rear-facing camera can be a fixed optical lens system or have focal length and optical zoom capability.

The audio component 810 is configured to output and/or input audio signals. For example, the audio component 810 includes a microphone (MIC), which is configured to receive external audio signals when the UE 800 is in operation modes, such as call mode, recording mode and voice recognition mode. Received audio signals may be further stored in the memory 804 or sent via the communication component 816. In some embodiments, the audio component 810 also includes a speaker for outputting audio signals.

The I/O interface 812 provides an interface between the processing component 802 and a peripheral interface module, which may be a keyboard, a click wheel, a button, and the like. These buttons may include, but are not limited to: a home button, volume buttons, start button, and lock button.

The sensor component 814 includes one or more sensors for providing the 800 with status assessments of various aspects. For example, the sensor component 814 may detect the open/closed state of the UE 800, the relative positioning of components, such as the display and keypad of the UE 800. The sensor component 814 may also detect the position change of the UE 800 or a component of the UE 800, the presence or absence of contact of the user with the UE 800, the orientation or acceleration/deceleration of the UE 800 and the temperature change of the UE 800. The sensor component 814 may include a proximity sensor configured to detect the presence of nearby objects in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the UE 800 and other devices. The UE 800 may access a wireless network based on a communication standard, such as Wi-Fi^{™}, 4G or 5G, or a combination thereof. In an exemplary embodiment, the communication component 816 receives broadcast signals or broadcast related information from an external broadcast management system via a broadcast channel. In an exemplary embodiment, the communication component 816 also includes a near field communication (NFC) module to facilitate short-range communication. For example, the NFC module may be implemented based on Radio Frequency Identification (RFID) technology, Infrared Data Association (IrDA) technology, Ultra-Wide Band (UWB) technology, Bluetooth (BT) technology or other technologies.

In an exemplary embodiment, the UE 800 may be powered by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors or other electronic component implementations for performing the methods described above.

In an exemplary embodiment, there is also provided a non-transitory computer-readable storage medium including instructions, such as the memory 804 including instructions, which may be executed by the processor 820 of the UE 800 to complete the above methods. For example, the non-transitory computer readable storage medium may be ROM, random access memory (RAM), CD-ROM, magnetic tape, floppy disk, optical data storage device, or the like.

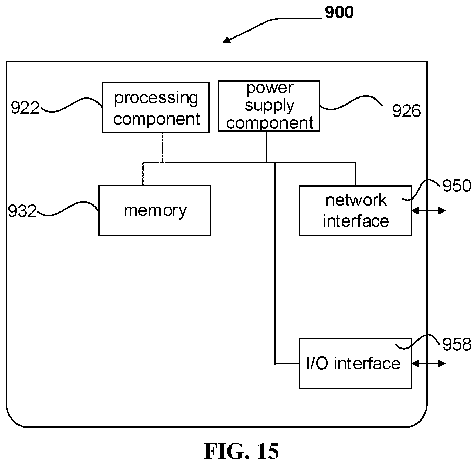

As illustrated in FIG. 15, embodiments of the disclosure illustrates a structure of a base station. For example, the base station 900 may be provided as a network side device. As illustrated in FIG. 15, the base station 900 includes processing component 922, which further includes one or more processors, and a memory resource represented by a memory 932 for storing instructions executable by the processing component 922, such as application programs. The application program stored in the memory 932 may include one or more modules each corresponding to a set of instructions. In addition, the processing component 922 is configured to execute instructions, so as to execute any of aforementioned methods applied to the base station, for example, the methods illustrated in FIG. 4 to FIG. 10.

The base station 900 may also include a power component 926 configured to perform power management of the base station 900, a wired or wireless network interface 950 configured to connect the base station 900 to a network, and an I/O interface 958. The base station 900 may operate based on an operating system stored in the memory 932, such as Windows Server^{™}, Mac OS X^{™}, Unix^{™}, Linux^{™}, FreeBSD^{™} or the like.

Other embodiments of the disclosure will be readily apparent to those skilled in the art from consideration of the specification and practice of the disclosure described herein. This disclosure is intended to cover any modification, use or adaptation of the disclosure. These modifications, uses or adaptations follow the general principles of the disclosure and include common knowledge or conventional technical means in the technical field not disclosed in this disclosure. The specification and examples are to be considered exemplary only, with a true scope and spirit of the disclosure being indicated by the following claims.

It is understandable that the disclosure is not limited to the precise constructions which have been described above and shown in the accompanying drawings, and various modifications and changes may be made without departing from the scope thereof. The scope of the disclosure is limited only by the appended claims.

## Claims

1. A method for subscribing to and reporting a slice event based on an access type, performed by an Application Function (AF), comprising:
sending a first subscribe request to a Network Exposure Function (NEF) to request for an event report of a network slice associated with the access type; wherein the first subscribe request comprises access type information for indicating the access type, and the first subscribe request is used for instructing the NEF to send, to a Network Slice Admission Control Function (NSACF), a second subscribe request for subscribing to the event report requested by the first subscribe request.

2. The method of claim 1, wherein the event report comprises: a first event report and/or a second event report;
and the method comprises:
receiving the second event report returned by the NEF, wherein the second event report is determined based on a plurality of first event reports; the first event report comprises statistical registration data on User Equipment (UEs) registered to the network slice and/or statistical session data on sessions established by the network slice; and the second event report comprises aggregated statistical information obtained by aggregating statistical data contained in the plurality of first event reports.

3. The method of claim 1, comprising:
sending an unsubscribe request to the NEF, wherein the unsubscribe request is used for unsubscribing from a reporting of the event report of the network slice associated with the access type.

4. The method of any one of claims 1 to 3, wherein the access type information is configured to indicate at least one of:
the access type;
a radio access type; or
access assistance information.

5. The method of claim 4, wherein the access type indicates at least one of:
a 3^{rd} Generation Partnership Projection (3GPP) type;
a non-3GPP type; or
a 3GPP type and a non-3GPP type.

6. The method of claim 4, wherein the radio access type comprises at least one of:
a New Radio (NR) access type, an Evolved Universal Mobile Telecommunications System Terrestrial Radio Access (EUTRA) type, a Wireless Local Area Network (WLAN) access type, a Virtual Network (VIRTUAL) access type, a Narrowband Internet of Things (NBIOT) access type, a Wireline Network (WIRELINE) access type, a Wireline Cable Network (WIRELINE_CABLE) access type, a Wireline Broadband Network (WIRELINE_BBF) access type, an urban rail transit vehicle-ground integrated communication system (LTE-M) access type, a New Radio in Unlicensed Bands (NR_U) access type, an Evolved Universal Mobile Telecommunications System Terrestrial Radio Access in unlicensed bands (EUTRA_U) access type, a Trusted non-3GPP (TRUSTED _N3GAtype) access type, a Trusted Wireless LAN (TRUSTED_WLAN) access type, a Universal Mobile Telecommunications System Terrestrial Radio (UTRA) access type, a Global System for Mobile Communications Edge Radio Access Network (GSM EDGE Radio Access Network, GERA) access type, a New Radio Low Earth Orbit (NR_LEO) satellite access type, a New Radio Medium Earth Orbit (NR_MEO) access type, a New Radio Geostationary Earth Orbit (NR_GEO) access type, or New Radio Other Satellite (NR_OTHER_SA) access type.

7. The method of any one of claims 1 to 3, wherein the event report comprises at least one of:
a number of registered User Equipment (UEs);
a number of established Protocol Data Unit (PDU) sessions;
a ratio of a number of registered UEs to an allowed maximum number of registered UEs; or
a ratio of a number of established PDU sessions to an allowed maximum number of established PDU sessions.

8. The method of any one of claims 1 to 3, wherein the first subscribe request comprises one of:
a slice identifier for identifying the network slice; or
an application identifier, used for determining a slice identifier associated with the application identifier;
wherein the slice identifier is used for the NEF to determine one or more NSACFs associated with the slice identifier.

9. The method of any one of claims 1 to 3, wherein the first subscribe request comprises:
a slice identifier and a Data Network Name (DNN) corresponding to the slice identifier.

10. The method of any one of claims 1 to 3, wherein the first subscribe request comprises report configuration information, wherein the report configuration information comprises at least one of:
a threshold used to trigger a reporting;
a predetermined time interval for a periodic reporting; or
an immediate report identifier, wherein the immediate report identifier is configured to indicate to report once the subscribe request is received.

11. A method for subscribing to and reporting a slice event based on an access type, performed by a Network Exposure Function (NEF), comprising:
receiving a first subscribe request sent by an Application Function (AF); wherein the first subscribe request is used for requesting for an event report of a network slice associated with the access type, and the first subscribe request comprises access type information for indicating the access type; and
sending a second subscribe request to a Network Slice Admission Control Function (NSACF), wherein the second subscribe request is used for subscribing to the event report requested by the first subscribe request.

12. The method of claim 11, wherein sending the second subscribe request to the NSACF comprises one of:
sending the second subscribe request to one or more NSACFs associated with the network slice; or
sending the second subscribe request to the NSACF supporting a subscribe function.

13. The method of claim 12, wherein the first subscribe request comprises:
a slice identifier for identifying the network slice;
or
a slice identifier for identifying the network slice and a Data Network Name (DNN) corresponding to the slice identifier.

14. The method of claim 12, wherein the first subscribe request comprises an application identifier;
and the method comprises: determining a slice identifier for identifying the network slice based on the application identifier.

15. The method of claim 14, wherein determining the slice identifier for identifying the network slice based on the application identifier comprises one of:
acquiring the slice identifier corresponding to the application identifier from an Network Repository Function (NRF) based on the application identifier; or
determining the slice identifier based on the application identifier and configuration information, wherein the configuration information comprises a correspondence between the application identifier and the slice identifier.

16. The method of any one of claims 11 to 15, comprising:
receiving an unsubscribe request sent by the AF; and
sending the unsubscribe request to the NSACF; wherein the unsubscribe request is used for unsubscribing from a reporting of the event report of the network slice associated with the access type.

17. The method of any one of claims 11 to 15, wherein the event report comprises: a first event report and/or a second event report;
and the method comprises: receiving the second event report sent by the NSACF; wherein the second event report is determined by the NSACF based on a plurality of first event reports; the first event report comprises: statistical registration data on User Equipment (UEs) registered to the network slice and/or the statistical session data on sessions established by the network slice; and the second event report comprises aggregated statistical information obtained by aggregating statistical data contained in plurality of first event reports; and sending the second event report to the AF.

18. The method of any one of claims 11 to 15, wherein the event report comprises: a first event report and/or a second event report;
and the method comprises:
receiving the first event report sent by the NSACF;
determining the second event report based on a plurality of first event reports, wherein the second event report comprises aggregated statistical information obtained by aggregating statistical data contained in the plurality of first event reports; and
sending the second event report to the AF.

19. The method of any one of claims 11 to 15, wherein the access type information comprises at least one of: the access type; a radio access type; or access assistance information.

20. The method of claim 19, wherein the access type indicates at least one of:
a 3^{rd} Generation Partnership Projection (3GPP) type;
a non-3GPP type; or
a 3GPP type and a non-3GPP type.

21. The method of claim 19, wherein the radio access type comprises at least one of:
a New Radio (NR) access type, an Evolved Universal Mobile Telecommunications System Terrestrial Radio Access (EUTRA) type, a Wireless Local Area Network (WLAN) access type, a Virtual Network (VIRTUAL) access type, a Narrowband Internet of Things (NBIOT) access type, a Wireline Network (WIRELINE) access type, a Wireline Cable Network (WIRELINE_CABLE) access type, a Wireline Broadband Network (WIRELINE_BBF) access type, an urban rail transit vehicle-ground integrated communication system (LTE-M) access type, a New Radio in Unlicensed Bands (NR_U) access type, an Evolved Universal Mobile Telecommunications System Terrestrial Radio Access in unlicensed bands (EUTRA_U) access type, a Trusted non-3GPP (TRUSTED _N3GAtype) access type, a Trusted Wireless LAN (TRUSTED_WLAN) access type, a Universal Mobile Telecommunications System Terrestrial Radio (UTRA) access type, a Global System for Mobile Communications Edge Radio Access Network (GSM EDGE Radio Access Network, GERA) access type, a New Radio Low Earth Orbit (NR_LEO) satellite access type, a New Radio Medium Earth Orbit (NR_MEO) access type, a New Radio Geostationary Earth Orbit (NR_GEO) access type, or New Radio Other Satellite (NR_OTHER_SA) access type.

22. The method of any one of claims 11 to 15, wherein the event report comprises at least one of:
a number of registered UEs;
a number of established Protocol Data Unit (PDU) sessions;
a ratio of a number of registered UEs to an allowed maximum number of registered UEs; or
a ratio of a number of established PDU sessions to an allowed maximum number of established PDU sessions.

23. The method of any one of claims 11 to 15, wherein the second subscribe request comprises report configuration information, wherein the report configuration information comprises at least one of:
a threshold used to trigger a reporting;
a predetermined time interval for a periodic reporting; or
an immediate report identifier, wherein the immediate report identifier is configured to indicate to report once the subscribe request is received.

24. A method for subscribing to and reporting a slice event based on an access type, performed by a Network Slice Admission Control Function (NSACF), comprising:
receiving a second subscribe request sent by a Network Exposure Function (NEF); wherein the second subscribe request is sent by the NEF based on an indication of a received first subscribe request; the first subscribe request is used for requesting for an event report of a network slice associated with the access type, and the first subscribe request comprises access type information for indicating the access type; and
sending the event report requested by the first subscribe request subscribed to by the second subscribe request to the NEF.

25. The method of claim 24, wherein the event report comprises a first event report; and wherein sending the event report requested by the first subscribe request and subscribed to by the second subscribe request to the NEF comprises: sending the first event report to the NEF; wherein the first event report comprises statistical registration data on User Equipment (UEs) registered to the network slice and/or statistical session data on sessions established by the network slice.

26. The method of claim 24, wherein the event report comprises: a first event report and/or a second event report; and
wherein sending the event report requested by the first subscribe request and subscribed to by the second subscribe request to the NEF comprises:
acquiring a plurality of first event reports; wherein the first event report comprises statistical registration data on User Equipment (UEs) registered to the network slice and/or statistical session data on sessions established by the network slice;
determining the second event report based on the first event reports; wherein the second event report comprises aggregated statistical information obtained by aggregating statistical data contained in the plurality of first event reports; and
sending the second event report to the NEF.

27. The method of claim 24, comprising:
receiving an unsubscribe request sent by the NEF; and
determining, based on the unsubscribe request, not to report the reporting of the event report associated with the access type.

28. The method of claim 24, wherein the second subscribe request comprises report configuration information; and the report configuration information comprises at least one of:
a threshold used to trigger a reporting;
a predetermined time interval for a periodic reporting; or
an immediate report identifier, wherein the immediate report identifier is configured to indicate to report once the subscribe request is received.

29. The method of claim 28, wherein sending the event report of the network slice associated with the access type subscribed to by the second subscribe request to the NEF comprises one of:
sending the event report of the network slice associated with the access type to the NEF based on the NSACF meeting the threshold to trigger the reporting;
sending the event report of the network slice associated with the access type to the NEF based on the predetermined time interval; or
sending the event report of the network slice associated with the access type to the NEF based on the second subscribe request comprising the immediate report identifier.

30. The method of any one of claims 24 to 29, wherein the event report comprises at least one of:
a number of registered UEs;
a number of established Protocol Data Unit (PDU) sessions;
a ratio of a number of registered UEs to an allowed maximum number of registered UEs; or
a ratio of a number of established PDU sessions to an allowed maximum number of established PDU sessions.

31. The method of any one of claims 24 to 29, wherein the access type information is configured to indicate at least one of:
the access type, wherein the access type indicates a 3^{rd} Generation Partnership Projection (3GPP) type or a non-3GPP type;
a radio access type; or
access assistance information.

32. The method of claim 31, the access type indicates at least one of:
the 3GPP type;
the non-3GPP type; or
the 3GPP type and the non-3GPP type.

33. The method of claim 32, wherein the radio access type comprises at least one of:
a New Radio (NR) access type, an Evolved Universal Mobile Telecommunications System Terrestrial Radio Access (EUTRA) type, a Wireless Local Area Network (WLAN) access type, a Virtual Network (VIRTUAL) access type, a Narrowband Internet of Things (NBIOT) access type, a Wireline Network (WIRELINE) access type, a Wireline Cable Network (WIRELINE_CABLE) access type, a Wireline Broadband Network (WIRELINE_BBF) access type, an urban rail transit vehicle-ground integrated communication system (LTE-M) access type, a New Radio in Unlicensed Bands (NR_U) access type, an Evolved Universal Mobile Telecommunications System Terrestrial Radio Access in unlicensed bands (EUTRA_U) access type, a Trusted non-3GPP (TRUSTED _N3GAtype) access type, a Trusted Wireless LAN (TRUSTED_WLAN) access type, a Universal Mobile Telecommunications System Terrestrial Radio (UTRA) access type, a Global System for Mobile Communications Edge Radio Access Network (GSM EDGE Radio Access Network, GERA) access type, a New Radio Low Earth Orbit (NR_LEO) satellite access type, a New Radio Medium Earth Orbit (NR_MEO) access type, a New Radio Geostationary Earth Orbit (NR_GEO) access type, or New Radio Other Satellite (NR_OTHER_SA) access type.

34. An apparatus for subscribing to and reporting a slice event based on an access type, applied to an Application Function (AF), comprising:
a first sending module, configured to send a first subscribe request to a Network Exposure Function (NEF) to request for an event report of a network slice associated with the access type; wherein the first subscribe request comprises access type information for indicating the access type, and the first subscribe request is used for instructing the NEF to send, to a Network Slice Admission Control Function (NSACF), a second subscribe request for subscribing to the event report requested by the first subscribe request.

35. An apparatus for subscribing to and reporting a slice event based on an access type, applied to a Network Exposure Function (NEF), comprising:
a second receiving module, configured to receive a first subscribe request sent by an Application Function (AF); wherein the first subscribe request is used for requesting for an event report of the network slice associated with the access type, and the first subscribe request comprises access type information for indicating the access type; and
a second sending module, configured to send a second subscribe request to a Network Slice Admission Control Function (NSACF), wherein the second subscribe request is used for subscribing to the event report requested by the first subscribe request.

36. An apparatus for subscribing to and reporting a slice event based on an access type, applied to a Network Slice Admission Control Function (NSACF), comprising:
a third receiving module, configured to receive a second subscribe request sent by a Network Exposure Function (NEF); wherein the second subscribe request is sent by the NEF based on an indication of a received first subscribe request; the first subscribe request is used for requesting for an event report of a network slice associated with the access type, and the first subscribe request comprises access type information for indicating the access type; and
a third sending module, configured to send the event report requested by the first subscribe request and subscribed to by the second subscribe request to the NEF.

37. A device for subscribing to and reporting a slice event based on an access type, comprising:
a processor; and
a memory, for storing instructions executable by the processor;
wherein the processor is configured to perform the method for subscribing to and reporting the slice event based on the access type of any one of claims 1 to 10, claims 11 to 23, or claims 24 to 33 when running the executable instructions.

38. A computer storage medium, having a computer-executable program stored thereon, wherein when the executable program is executed by a processor, the method for subscribing to and reporting the slice event based on the access type of any one of claims 1 to 10, claims 11 to 23, or claims 24 to 33 is performed.
